# EUROPÄISCHE PATENTSCHRIFT

(11) **EP 0 846 089 B1**
(45) Veröffentlichungstag und Bekanntmachung des Hinweises auf die Patenterteilung: **02.04.2003**
(21) Anmeldenummer: 96929254.9
(22) Anmeldetag: 14.08.1996
(51) Int. Cl.: C04B 24/08, C04B 28/14

(54) **Verwendung wenigstens eines fettchemischen Additivs für eine GIPSHALTIGE ZUSAMMENSETZUNG**
Use of at least one fat-like additive for a GYPSUM-CONTAINING COMPOSITION
Utilisation d'au moins un additif du type corps gras pour des COMPOSITION CONTENANT DU GYPSE

(30) Priorität: 23.08.1995 DE 19530819
(43) Veröffentlichungstag der Anmeldung: 10.06.1998
(73) Patentinhaber: Henkel Kommanditgesellschaft auf Aktien, 40589 Düsseldorf-Holthausen (DE)
(72) Erfinder: LEPSIUS, Tilwin, D-40545 Düsseldorf (DE); KLEIN, Johann, D-40233 Düsseldorf (DE); KLAUCK, Wolfgang, D-40670 Meerbusch (DE)
(86) Internationale Anmeldenummer: EP9603587
(87) Internationale Veröffentlichungsnummer: WO97008112

(56) Entgegenhaltungen:
- EP-A- 0 058 388
- EP-A- 0 293 973
- EP-A- 0 342 609
- EP-A- 0 518 156
- DE-A- 1 957 263
- GB-A- 2 205 562
- CHEMICAL ABSTRACTS, vol. 93, no. 12, 22.September 1980 Columbus, Ohio, US; abstract no. 119280b, USAMI,TOSHIO; OHIRA, AKIO: "waterproof gypsum products" XP000158879 & JP,A,55 037 423 (MITSUI PETROCHEMICAL)
- CHEMICAL ABSTRACTS, vol. 102, no. 22, 3.Juni 1985 Columbus, Ohio, US; abstract no. 189914q, MITSUBISHI CHEMICAL INDUSTRIES: "water-repellent compositions for cement, gypsum slag cement and other inorganic materials" XP002019721 & JP,A,06 005 054 (MITSUBISHI CHEMICAL INDUSTRIES)
- CHEMICAL ABSTRACTS, vol. 94, no. 16, 20.April 1981 Columbus, Ohio, US; abstract no. 126451g, DENKI KAGAKU KOGYO: "cement composition containing a fatty acid ester of sucrose" XP002019722 & JP,A,55 121 936 (DENKI KAGAKU KOGYO)
- CHEMICAL ABSTRACTS, vol. 106, no. 16, 20.April 1987 Columbus, Ohio, US; abstract no. 125020, OCHI, KOSUKE ET AL.: "concrete admixtures for improving workability" XP002019723 & JP,A,61 281 054 (KAO CORP.)
- CHEMICAL ABSTRACTS, vol. 110, no. 24, 12.Juni 1989 Columbus, Ohio, US; abstract no. 218063j, OWADA, HIROHISA ET AL.: "waterproofing agents for cement products" XP000180718 & JP,A,63 260 845 (MIYOSHI OIL AND FAT CO.)

## Beschreibung

Die vorliegende Erfindung betrifft die Verwendung wenigstens eines speziellen fettchemischen Additivs für eine gipshaltige Zusammensetzung.

Gips als Anhydrid oder Halbhydrat ist seit langer Zeit wegen seiner Möglichkeit, mit Wasser abzubinden, ein geschätzter Rohstoff mit vielen interessanten Eigenschaften, beispielsweise einem geringen Schrumpf, Feuerfestigkeit sowie einer pH-Neutralität bei der Aushärtung. Auch aus der Rauchgasentschwefelung fallen heute große Mengen an Gips an, die einer umweltverträglichen Nutzung zugeführt werden sollten.

Ein Nachteil abgebundener Gipsmörtel, -estriche und -beschichtungen ist jedoch z. B. die relativ geringe Wasserfestigkeit dieser Systeme. Der Einsatz von Gips stellt heute im Außenbereich, beispielsweise als Putz, ein noch unüberwundenes Problem dar.

Es ist bereits bekannt, eine Hydrophobierung von Gips durch spezielle Polysiloxane, die von Mengen bis 2 Gew.-% zugesetzt werden, zu bewirken. Dies ist aber insofern nachteilig, daß der Zusatz von Polysiloxanen durch deren biologische Nichtabbaubarkeit und deren ungünstige Ökobilanz während der Herstellung die Umwelt stark belastet. Außerdem ist auch die Qualität von derart modifizierten Gipsen nicht für die Außenanwendung ausreichend.

Aus der deutschen Offenlegungsschrift 32 38 390 ist ein Trockenmörtel, der Gips oder Zement als Bindemittel und weiterhin in einer Menge von 0,05 bis 1 Vol.-%, bezogen auf das Volumen des Trockenmörtels, eine Mischung aus 60 bis 88 % einer paraffinischen Kohlenwasserstoffrnischung mit 10 bis 20 Kohlenstoffatomen und/oder eines Glyzerinesters, einer höheren Fettsäure oder eines Fettes und 12 bis 40 % eines Tensids als Emulgator enthält. Die vorgenannte Mischung hat hydrophobierende Eigenschaften, wodurch der Mörtel bessere wärmeisolierende Eigenschaften und Frostresistenz aufweist.

Aus der JP-A-82/61648 ist ein Dispersionsmittel für Gips bekannt, welches ein Kondensat einer (Alkyl)Naphthalinsulfonsäure und Formaldehyd sowie eines Siliciumdioxidpulver und gegebenenfalls weiterhin ein Öl, welches ausgewählt ist aus mineralischen Ölen, synthetischen Schmierölen und natürlichen ölen enthält. Der Gips dispergiert so gut in Wasser, bis er durch Umsatz mit Wasser abbindet. Das Abscheiden von Wasser aus der Mischung von Gips und Wasser, d. h. der Gipsaufschlämmung, wird während des Abbindens vermindert, und der ausgehärtete Gips wird in hoher Qualität erhalten.

Aus der JP-A-73/73427 sind sowohl feuer- als auch wasserbeständige Putzmörtelwände mit erhöhter Wasserfestigkeit, welche Celluloseether enthalten, bekannt, die erhalten werden, indem man eine Aufschlämmung von calciniertem Gips zusammen mit einem wäßrigen Celluloseharz, Asbest- oder Glasfasern in Gegenwart eines Metallsalzes einer höheren Fettsäure in einer Form umsetzt und erhitzt, um das Wasser auszutreiben.

Aus der JP-A-79/10974 sind Bauplatten mit verbesserter Wasserbeständigkeit bekannt, die erhalten werden, indem man einem hydraulischen Material wie Zement oder gebranntem Gips eine höhere Fettsäure oder deren Salz in relativ hoher Menge hinzugibt.

Aus der belgischen Patentanmeldung 873812 ist ein verfestigtes Gipsbeton bekannt, welches erhalten wird durch inniges Vermischen von Gips und Wasser, wobei ein Teil des Gipses durch ein praktisch unlösliches Metallsalz einer Fettsäure ersetzt wird. Als Hydrophobierungsmittel wird ein Calcium-, Aluminium-, Barium-, Blei-, Magnesium-, Zink-, Kupfer- oder Nickelsalz der Stearinsäure, Ölsäure, Palmitinsäure oder ähnlicher Säuren eingesetzt.

Aus der JP-A-82/3751 sind wasserbeständige, abgebundene Gipsformteile bekannt, die durch Umsetzung eines wasserabweisenden Mittels mit Calciumoxidsemihydrat, Zugabe von Wasser, Formung und Erhitzen in einer kohlendioxidhaltigen Atmosphäre erhalten werden. Dieses wasserabweisende Mittel wird in einer Menge von 0,5 bis 12 Gew.-% in Form einer höheren Fettsäure wie Stearinsäure, Palmitinsäure, Ölsäure, Kokosölfettsäuren etc. und ihrer Alkali/Erdalkalimetallsalze eingesetzt.

Aus der JP-A-83/41750 ist ein Material für Flächenelemente bekannt, welches durch Umsetzung eines wasserabbindbaren Materials, wie Zement, einer Mischung von Zement, granulierter Schlacke und Gips usw., eines anorganischen, faserhaltigen Materials wie Steinwolle, Glasfasern usw., eines viskositätserhöhenden Materials wie Methylcellulose, Polyethylenglykol usw. sowie eines Metallsalzes einer höheren Fettsäure, beispielsweise Natriumstearat, Kaliumstearat, Natriumoleat, Kaliumoleat usw. erhalten wird.

Die JP-A-83/36955 betrifft Mörtelzusammensetzungen, bei denen granulierte Hochofenschlacke als Aggregat eingesetzt wird, welche eine sehr gute, gleichbleibende Qualität aufweisen. Derartige Mischungen enthalten 10 Gewichtsteile Calciumsulfatmonohydrat und 50 bis 200 Gewichtsteile eines Hochofenschlackegranulats als Aggregat, 0,03 bis 3 Gewichtsteile Phosphat, 0,03 bis 3 Gewichtsteile eines Verzögerungsmittels auf Proteinbasis und, sofern notwendig, Zusatzstoffe, unter anderem ein Fettsäuresalz.

Aus der JP-A-82/175764 ist eine wasserabstoßende Platte aus einem anorganischen Material bekannt, die beispielsweise erhalten wird, indem man eine wäßrige Lösung eines Aluminiumsalzes einer Fettsäure zu einer Aufschlämmung, die ein hydraulisches, anorganisches Material, beispielsweise Zement oder Gips, ein Fasermaterial und ein Aggregat enthält. Die Mischung wird in eine Form gegeben und abgebunden und wird dann dadurch getrocknet, daß man sie einer Hitzebehandlung aussetzt, in der Weise, daß die interne Temperatur höher als 80 °C ist. Durch den Zusatz des Aluminiumsalzes der Fettsäure wird sowohl das Ausglühen wie auch der Bruch und das Abplatzen von Schichten vermieden.

Aus der EP-A-321816 ist es bekannt, ethoxylierte Fettalkohole mit 12 bis 22 Kohlenstoffatomen, die einen HLB-Wert von 4,5 bis 11 aufweisen, als Tensidkomponenten zu gipshaltigen Zusammensetzungen zu geben, denen gegebenenfalls hydroxyalkylierte Methylcellulose hinzugefügt wird. Die so hergestellten Verbindungen können als Mörtel, Füllmaterial usw. eingesetzt werden. Die Zugabe dieser ethoxylierten Fettalkohole unterdrückt die Verklumpung, wenn die Zusammensetzung mit Wasser gemischt wird.

Gipsadditive auf Basis von Fettalkoholen mit wenigstens 10 Kohlenstoffatomen werden in der Zeitschrift "ConChem Journal", Bd. 2 (1994), S. 23, beschrieben.

Die JP-A-90/296780 betrifft ein Gipsprodukt niederer Dichte, welches erhalten wird durch Verschäumen einer Gipsaufschlämmung, wobei als Schäumer ein Sulfonat eines C₁₀ bis C₁₆-Fettsäurealkylesters eingesetzt wird.

Aus der EP-A-54175 sind Mörtelmischungen auf Basis von Zement, Gips undloder Calciumhydroxid, Standardfüllstoffen und Hilfsstoffen bekannt, bei denen zu der noch wasserfreien Mörtelmischung 0,05 bis 0,5 % eines wasserlöslichen, nichtionischen nichtionischen Celluloseethers und 0,01 bis 0,05 % eines Ethylenoxidaddukts eines Fettalkohols und/oder einer Fettsäure oder deren Amid zugegeben wird. Diese Mörtelmischungen werden in der Herstellung von luftporenhaltigem Mörtel, Gips und calciumhydroxidhaltigem Klebmörtel verwendet, beispielsweise zum Verlegen von Dachziegeln und Mosaiken und für porenhaltigen Portland-Zement auf Basis eines Mörtelbindemittels.

Die DE 2908271 offenbart die nachträgliche Beschichtung von z. B. Gipskartonplatten mit wasserbasiertem Wachs, Paraffin und Harzdispersionen.

Der vorliegenden Erfindung liegt die Aufgabe zugrunde, eine gipshaltige Zusammensetzung bereitzustellen, die zur Abbindeverzögerüng des Gipses ein spezielles fettchemisches Additiv oder Mischungen unterschiedlicher Additive einsetzt.

Diese Aufgabe wird durch die Kennzeichen von Anspruch 1 gelöst.

Die vorliegende Erfindung betrifft die Verwendung von 0,1 bis 30 Gew.-%, bezogen auf die trockene Gesamtmischung, wenigstens eines der folgenden fettchemischen Additive in einer gipshaltigen Zusammensetzung
- wenigstens einem wenigstens eine Carboxylgruppe enthaltenden Fettstoff, der mindestens 8 Kohlenstoffatome aufweist und/oder dessen Salz, mit einer Molmasse von 143 bis 20.000,
- wenigstens einem wenigstens eine Hydroxylgruppe enthaltenden Fettstoff, der mindestens 8 Kohlenstoffatome aufweist, mit einer Molmasse von 130 bis 20.000,
- wenigstens einem wenigstens eine Estergruppe enthaltenden Fettstoff, wobei der Säureteil und/oder der Alkoholteil mindestens 8 Kohlenstoffatome aufweist, mit einer Molmasse von 158 bis 20.000,
- wenigstens einem wenigstens eine Ethergruppe enthaltenden Fettstoff, wobei wenigstens einer der beiden Etherreste mindestens 8 Kohlenstoffatome aufweist, mit einer Molmasse von 144 bis 20.000,
- wenigstens einem wenigstens eine Aminogruppe oder ein quaternäres Ammoniumsalz enthaltenden Fettstoff, wobei wenigstens eine der 3 bzw. 4 um das Stickstoffatom angeordneten Gruppen mindestens 8 Kohlenstoffatome aufweist, mit einer Molmasse von 129 bis 20.000,
- wenigstens einem wenigstens eine Amidgruppe enthaltenden Fettstoff, wobei der Säurerest des Amides mindestens 8 Kohlenstoffatome aufweist, mit einer Molmasse von 157 bis 20.000,
- wenigstens einem wenigstens eine Epoxidgruppe enthaltenden Fettstoff, wobei dieser mindestens 8 Kohlenstoffatome aufweist, mit einer Molmasse von 128 bis 20.000,
- wenigstens einem wenigstens eine Anhydridgruppe enthaltenden Fettstoff, wobei dieser mindestens 8 Kohlenstoffatome aufweist, mit einer Molmasse von 210 bis 20.000,
- wenigstens einem phosphororganischen Fettstoff, der mindestens 8 Kohlenstoffatome aufweist, mit einer Molmasse von 193 bis 20.000,
- wenigstens einem bororganischen Fettstoff, der mindestens 8 Kohlenstoffatome aufweist, mit einer Molmasse von 174 bis 20.000,
- wenigstens einem schwefelorganischen Fettstoff, der mindestens 8 Kohlenstoffatome aufweist, mit einer Molmasse von 164 bis 20.000,
- wenigstens einem wenigstens eine Urethangruppe aufweisenden Fettstoff, der mindestens 8 Kohlenstoffatome aufweist mit einer Molmasse von 213 bis 20.000 und/oder
- wenigstens einen wenigstens eine Ketogruppe enthaltenden Fettstoff, der mindestens 8 Kohlenstoffatome aufweist, mit einer Molmasse von 130 bis 20.000,
- mit der Maßgabe, daß als wenigstens eine wenigstens eine Carboxylgruppe enthaltender Fettstoff keine höhere Fettsäure oder deren Salz allein eingesetzt wird, mit der weiteren Maßgabe, daß als wenigstens ein wenigstens eine Hydroxylgruppe enthaltender Fettstoff kein Fettalkohol oder ethoxylierter Fettalkohol allein eingesetzt wird; mit der weiteren Maßgabe, daß als wenigstens ein wenigstens eine Estergruppe enthaltender Fettstoff kein natürliches Fett oder Öl allein eingesetzt wird,
- mit der weiteren Maßgabe, daß als schwefelorganischer Fettstoff nicht ein Sulfonat eines C₁₀ bis C₁₆-Fettsäurealkylesters allein eingesetzt wird sowie,
- mit der Maßgabe, daß als wenigstens ein wenigstens eine Amidgruppe enthaltender Fettstoff kein Ethylenoxidaddukt eines Fettsäureamids allein eingesetzt wird.

In der gipshaltigen Zusammensetzung wird als Hauptkomponente ein Gips als Anhydrid oder Halbhydrat mit allen vorkommenden chemischen Modifikationen (α-und β-Halbhydrat, Anhydrit I, II, III) auf Basis von Naturgips, Chemiegips oder als Gips aus der Rauchgasentschwefelung. Prinzipiell können diese hydraulisch abbindenden Versionen auf Basis des CaSO₄ sowohl rein als auch in Mischung vorliegen.

Bei dem Naturgips kann üblicherweise ein β-Gips, wie er über das Drehofenverfahren oder das Großkocherverfahren erhalten wird, eingesetzt werden. Einen entsprechenden Mehrphasengips erhält man über das Rostbandofenverfahren und einen α-Gips über das Autoklav-Verfahren.

Bei den in Form von Chemiegipsen eingesetzten Gipstypen erhält man den β-Gips nach dem Drehofenverfahren nach Knauf, dem Großkocherverfahren nach Knauf sowie nach dem Großkocherverfahren ohne Umkristallisation. Einen entsprechenden Mehrphasengips erhält man als Chemiegips nach dem Großbrandaggregatverfahren nach Knauf, und einen α-Gips nach dem Autoklav-Verfahren nach Giulini.

In der heutigen Zeit fällt allerdings ein großer Teil des Gipses aus der Rauchgasentschwefelung an, wo er über das Bischoff-Verfahren, das Saarberg-Hölter-Verfahren sowie das Bergbau-Forschungs-Verfahren, beispielsweise 1990 etwa 2 Mio. Tonnen Rückstandsgips erzeugt wurden. Hier hat insbesondere das α-Halbhydrat aus REA-Gips (REA = Rauchgasentschwefelungsanlage) besondere Bedeutung erlangt.

In den gipshaltigen Zusammensetzungen liegt Gips der vorgenannten Provenienzen als Hauptprodukt in Mengen von 50 bis 99,9 Gew.-%, vorzugsweise 70 bis 98 Gew.-%, bezogen auf den anorganischen Bindemittelanteil der Trockenmischung, vor.

Unter Fettstoffen im Sinne der vorliegenden Erfindung sind aus natürlichen, insbesondere pflanzlichen und tierischen Ölen erhältliche Fettsäuren, Fettalkohole und deren Derivate bzw. Folgeprodukte zu verstehen.

Diese liegen in der Natur in Form natürlicher Gemische unterschiedlicher Fettsäureglyzerinester vor, beispielsweise in Form von Palmöl, Palmkernöl, Palmstearin, Olivenöl, Rüböl, Korianderöl, Sonnenblumenöl, Baumwollöl, Erdnußöl, Leinöl, Lardöl, Fischöl, Fischtranöl oder Schweineschmalz.

Aufgrund ihres hohen natürlichen Anteils an gesättigten Fettsäuren kann es sich als besonders vorteilhaft erweisen, von Kokosöl, Palmkernöl oder Rindertalg auszugehen.

Darüber hinaus können neben diesen Fettmischungen auch die entsprechenden Einzelstoffe eingesetzt werden.

Als Beispiele für die gesättigten Fettsäuren mit 8 bis 26 Kohlenstoffatomen, vorzugsweise 12. bis 22 Kohlenstoffatomen, seien genannt: Capron-, Capryl-, Caprin-, Laurin-, Myristin-, Palmitin-, Stearin-, Arachin-, Behen-, Cerotin-, Pentadecan-, Margarin-, Tridecan- und Lignocerinsäure. Als Beispiele für die ungesättigten Fettsäuren mit 8 bis 26 Kohlenstoffatomen, vorzugsweise 12 bis 22 Kohlenstoffatomen seien genannt: Myristolein-, Palmitolein-, Öl-, Elaidin-, Petroselin-, Eruca-, Linol-, Linolen-, Arachidon-, Clupanodon-, Docosahexaen-, Eicosapentaen- und Gadoleinsäure.

Als Beispiele für die gesättigten Fettalkohole mit 8 bis 26 Kohlenstoffatomen, vorzugsweise 12 bis 22 Kohlenstoffatomen, die großtechnisch durch Reduktion (Hydrierung) von Fettsäuremethylestem synthetisiert werden, seien genannt: Capronalkohol, Caprylalkohol, Pelargonalkohol, Caprinalkohol, Laurinalkohol, Myristinalkohol, Cetylalkohol, Stearylalkohol, Gadoleylalkohol und Behenylalkohol.

Erfindungsgemäß werden aus den obengenannten Bausteinen abgeleitete, entsprechend der gewünschten Wirkung im Gips funktionalisierte Fettstoffe verwendet. Vorzugsweise werden Derivate mit einer Molmasse > 129 bis 20.000, bestimmt über GPC, bzw. oligomerisierte Fettstoffe mit einer Molmasse > 1000 und polymere Fettstoffe mit einer Molmasse > 2000 eingesetzt.

Da es sich bei diesen Stoffen in der Regel um komplexe Stoffgemische handelt, sind die Fettstoffe im folgenden charakterisiert durch die ihnen enthaltenen wichtigsten funktionellen Gruppen.

Nach einer ersten bevorzugten Ausführungsform handelt es sich bei dem fettchemischen Additiv um wenigstens einen eine Carboxylgruppe enthaltenden Fettstoff. Dies sind zunächst Oxydationsprodukte von Guerbetalkoholen. Guerbetalkohole können z. B. durch Eigenkondensation von Fettalkoholen in Gegenwart von Alkalien hergestellt werden (Soap, Cosm. Chem. Spec. 53 (1987)). Als Beispiele seien genannt: 2-Hexyldecansäure, 2-Octyldodecansäure, 2-Decyltetradecansäure, 2-Dodecylhexa-decansäure, 2-Tetradecyloctadecansäure, 2-Hexadecyleicosansäure, usw. Gegegebenfalls können Gemische ausgehend von technischen Guerbetalkoholen verwendet werden.

Dies sind weiterhin Additionsprodukte von ungesättigten Fettsäuren mit Dienophilen wie z.B. wie Acrylsäure, Maleinsäure, Fumarsäure, Acetylendicarbonsäure Styrol, Cyclopentadien und α-Olefinen.

Weiter zu nennen ist hier die Polymerisation von Fettsäuren durch radikalische Polymerisation oder thermische Behandlung. Die Fettsäuren können auch durch Polymerisation von Fettsäureestern und anschließende Hydrolyse der Estergruppe hergestellt werden. Als Beispiele seien genannt: Dimer- und Trimerfettsäuren, ebenso die als Nebenprodukte der Dimerisierung anfallenden verzweigten Fettsäuren wie z.B. Isostearinsäure und Isopalmitinsäure.

Weiterhin sind dies Fettsäuren, die durch Hydrolyse von geblasenen und oxydierten Triglyceriden gewonnen werden. Beispiele sind hier Fettsäuremischungen aus geblasenem Fischöl und geblasenem Rüböl.

Schließlich fällt unter diese Definition auch Undecylensäure als Folgeprodukt der Pyrolyse von Ricinolsäuremethylester.

Nach einer ersten bevorzugten Ausführungsform werden insbesondere solche Fettstoffe eingesetzt, die neben wenigstens einer Carboxylgruppe auch noch wenigstens eine Hydroxylgruppe aufweisen. Dies sind beispielsweise Ricinolsäure, 12-Hydroxystearinsäure und 11-Hydroxyundecansäure als Zwischenprodukt der Synthese von Nylon-11. Reaktionsprodukte von epoxydierten Fettsäureestem mit Wasser wie z.B. 9,10-Dihydroxystearinsäure oder 9,10,12,13-Tetrahydroxystearinsäure.

Weiterhin ist es nach der ersten Klasse der Fettstoffe bevorzugt, daß das fettchemische Additiv neben wenigstens einer Carboxylgruppe zugleich auch wenigstens eine Hydroxygruppe enthält. Beispiele für diese Stoffklasse sind Partialester von mehrwertigen Carbonsäuren bzw. deren Anhydriden mit Fettstoffen, die mehrere Hydroxylgruppen enthalten. Als Beispiele für solche Produkte seien genannt: Partialester von Citronensäure mit Fettalkoholen mit 8 bis 26 C-Atomen oder Ricinusöl, Halbester von Maleinsäure mit Dimeralkohol oder Halbester von Phthalsäureanhydrid mit Ricinusöl.

Weiterhin sind dies Umsetzungsprodukte von epoxydierten Fettsäureestern mit 8 bis 100 C-Atomen mit einem Überschuß an mehrwertigen Carbonsäuren. Als Beispiel sei das Umsetzungsprodukt von epoxydiertem Sojaöl mit Adipinsäure genannt.

Schließlich sind dies Umsetzungsprodukte von Fettstoffen mit Ester- und Hydroxylgruppen (z.B. Ricinusöl) mit α,β-ungesättigten Säuren wie Acrylsäure, Itaconsäure, Fumarsäure oder Maleinsäure unter Verwendung von Radikalstartern.

Nach einer weiteren bevorzugten Ausführungsform besteht die erste Klasse der Fettstoffe aus Verbindungen, die zugleich wenigstens eine Carboxylfunktion, wenigstens eine Hydroxylfunktion sowie wenigstens eine Ethergruppe enthalten. Zu nennen sind hier Umsetzungsprodukte von epoxydierten Fettsäureestem mit ein- oder mehrwertigen Alkoholen mit anschließender Hydrolyse der Estergruppe. Als Beispiele seien Hydroxymethoxystearinsäure und Hydroxybutoxystearinsäure genannt.

Nach einer weiteren bevorzugten Ausführungsform der ersten Fettstoffklasse weisen diese sowohl wenigstens eine Estergruppe wie auch wenigstens eine Carboxylgruppe auf. Additionsprodukte von ungesättigten Fettsäureestem mit Dienophilen wie Acrylsäure, Maleinsäure, Fumarsäure und Acetylendicarbonsäure und von ungesättigten Fettsäuren mit 8 bis 26 C-Atomen mit den entsprechenden Estem.

Hier zu nennen sind außerdem Umsetzungsprodukte von maleinisierten Fettsäureestern mit ein- und höherwertigen Alkoholen zu Halbestern. Die Produkte können oligomeren bzw. polymeren Charakter besitzen.

Weiter sind dies carboxylterminierte Ester von Fettsäuren, mehrwertigen Alkoholen und mehrwertigen Carbonsäuren, wie sie in "Resins for Surface Coatings, Volume III", Edited by Dr. P. Oldring & G. Hayward, SITA Technology (London), 1987, Seite 188, beschrieben sind. Entsprechende Produkte können auch durch Umesterung von Fettsäureestern mit mehrwertigen Alkoholen und anschließende Veresterung mit mehrwertigen Carbonsäuren hergestellt werden.

Schließlich sind dies Ester von hydroxylgruppenhaltigen Fettstoffen mit mehrwertigen Carbonsäuren im Überschuß.

Eine weitere Stoffklasse innerhalb der ersten Gruppe der Fettstoffe sind solche, die neben wenigstens einer Carboxylgruppe auch noch wenigstens eine Estergruppe und wenigstens eine Ethergruppe enthalten. Dies sind beispielsweise carboxylterminierte Polyester aus Ringöffnungsprodukten von epoxydierten Fettsäureestern mit ein- und mehrwertigen Alkoholen mit anschließender Umsetzung mit einem molaren Überschuß an mehrwertigen Carbonsäuren. Als Beispiel hierfür werden beispielsweise Umsetzungsprodukte genannt von mit Methanol ringgeöffnetem, epoxydiertem Rüböl mit Phthalsäureanhydrid.

Eine weitere Unterklasse der Fettstoffe der ersten Klasse betrifft solche Fettstoffe, die zusätzlich zu wenigstens einer Carboxylgruppe auch noch wenigstens eine Estergruppe und wenigstens eine Anhydridgruppe enthalten. Hierunter fallen partiell mit Wasser oder ein- und mehrwertigen Alkoholen umgesetzte Addukte von Fettsäureestern mit Maleinsäureanhydrid. Als Beispiele seien hier genannt partielle Umsetzungsprodukte von maleiniertem Sojaöl mit Butanol.

Eine weitere Untergruppe der Fettstoffe der ersten Klasse sind solche, die zusätzlich neben wenigstens einer Carboxylgruppe auch noch wenigstens eine Anhydridgruppe enthalten. Dies sind Umsetzungsprodukte von ungesättigten Fettsäuren mit Maleinsäureanhydrid. Die Umsetzung kann sowohl thermisch als auch radikalisch durchgeführt werden. Als Beispiele hierfür seien genannt: Maleinierte Linolsäure sowie maleinierte Ölsäure. Unter die zweite Klasse der erfindungsgemäßen fettchemischen Additive fallen solche Fettstoffe, die wenigstens eine Hydroxylgruppe enthalten. Diese werden erhalten durch Guerbetisierung von gesättigten und ungesättigten Fettalkoholen. Als Beispiele für derartige Guerbetalkohole seien gennannt: 2-Hexyldecanol, 2-Octyldodecanol, 2-Decyltetradecanol, 2-Dodecylhexadecanol, 2-Tetradecyloctadecanol, 2-Hexadecyleicosanol, Guerbetalkohol aus Erucylalkohol, Behenylalkohol und Ocenolen. Gegebenfalls können Gemische, resultierend aus der Guerbetisierung technischen Fettalkohole, verwendet werden.

Fettstoffe mit mehreren Hydroxylgruppen wie z.B. Ricinoleyl-, 12-Hydroxystearylalkohol, Dimerdiol mit 18 bis 52 C-Atomen und Trimertriol (Hydrierungsprodukte von Dimer- und Trimerfettsäureestern).

Nach einer bevorzugten Ausführungsform der zweiten Klasse der fettchemischen Additive können diese sowohl wenigstens eine Hydroxylgruppe wie auch wenigstens eine Estergruppe enthalten. Als Beispiel hierfür sind zu nennen Ricinusöl, partiell dehydratisierte Ricinusöle, partiell mit ein- und mehrwertigen Carbonsäuren acylierte Ricinusöle, Polyester aus Ricinolsäure und 12-Hydroxystearinsäure (Estolide); Umsetzungsprodukte von epoxydierten Fettstoffen mit ein- und mehrwertigen Carbonsäuren bzw. ein- und mehrwertigen Alkoholen; Umesterungsprodukte von Fettsäureestern mit mehrwertigen Alkoholen (Partialglyceride); Umesterungsprodukte von Ricinusöl mit anderen Triglyceriden wie Rüböl, Sonnenblumenöl unter alkalischen Randomisierungsbedingungen; Ester von Fettalkoholen mit Hydroxycarbonsäuren, beispielsweise Weinsäure, Zitronensäure, Glucosesäure. Weiter ergeben sich diese Produkte durch Umsetzung analog der Alkydharzsynthese von Fettsäuren, ein- und mehrwertigen Alkoholen und mehrwertigen Carbonsäuren zu hydroxylterminerten Oligomeren. Entsprechende Produkte können auch durch Umesterung von Fettsäureestem mehrwertigen Alkoholen und anschließende Veresterung mit mehrwertige Carbonsäuren hergestellt werden. Weitere typische Vertreter sind Partialester von Fettsäuren mit mehrwertigen Alkoholen wie z.B. Glycerinmonooleat, Trimethylolpropandistearat, Pentaglycerinmonolaurat, Sorbitmonococoat. Hydroxylterminierte Veresterungsprodukte von hydroxylgruppenhaltigen Fettstoffen mit mehrwertigen Carbonsäuren.

Eine weitere Unterklasse innerhalb der zweiten Klasse betrifft solche Fettstoffe, die neben wenigstens einer Hydroxylgruppe und wenigstens einer Estergruppe auch noch wenigstens eine Amingruppe oder ein entsprechendes quatemäres Ammoniumsalz enthalten. Dies sind beispielsweise Umsetzungsprodukte von epoxydierten Fettsäureestern mit ein- und mehrwertigen Aminen, ohne daß es zu einer Amidierung der Esterfunktion kommt. Als Beispiel hierfür wird das Umsetzungsprodukt von Epoxystearinsäuremethylester und 1,6-Diaminohexan genannt, Amidierung von Fettsäureestem, insbesondere Triglyceriden mit Ammoniak, ein- und mehrwertigen Aminen ohne Abtrennung des Glycerins, gegebenenfalls mit partieller Amidierung.

Nach einer weiteren bevorzugten Unterklasse weisen gemäß zweiter Klasse die Fettstoffe nicht nur wenigstens eine Hydroxylgruppe, sondern darüber hinaus wenigstens eine Estergruppe und wenigstens eine Amidgruppe auf. Derartige Produkte werden erhalten durch Amidierung von Fettsäureestern, insbesondere Triglyceriden, mit Ammoniak, ein- und mehrwertigen Aminen ohne Abtrennung der Alkoholkomponente aus dem Ester (Glyzerin). Beispielsweise ist dies das Umsetzungsprodukt von Rüböl mit einem Unterschuß Stearylamin.

Nach einer weiteren bevorzugten Unterklasse der zweiten bevorzugten Ausführungsform der Fettstoffe können diese neben wenigstens einer Hydroxylgruppe auch wenigstens eine Estergruppe und wenigstens eine Anhydridgruppe enthalten. Dies sind Umsetzungsprodukte eines hydroxylgruppenhaltigen Fettsäureesters wie Ricinusöl mit Maleinsäureanhydrid unter Katalyse von Radikalstartern, beispielsweise Di-tert-butylperoxid, AIBN, tert.-Butylhydroperoxid und Dibenzoylperoxid.

Nach einer weiteren bevorzugten Unterklasse der bevorzugten zweiten Klasse der fettchemischen Additive kann dieses neben wenigstens einer Hydroxylgruppe auch wenigstens eine Ethergruppe aufweisen. Derartige Verbindungen werden erhalten durch Veretherung (z.B. durch Dehydratisierung mit sauren Katalysatoren) von Fettstoffen mit mehreren Hydroxylgruppen (z.B. Ricinoleyl-, 12-Hydroxystearylalkohol, Dimerdiol, Trimertriol) zu oligomeren, hydroxylterminierten Polyethern. Die Herstellung derartiger Fettstoffe wird in der DE 4316245 (A1) beschrieben.

Eine weitere bevorzugte Unterklasse der zweiten Klasse der bevorzugten Fettstoffe betrifft solche Fettstoffe, die neben wenigstens einer Hydroxylgruppe auch noch wenigstens eine Amidgruppe enthalten. Dies sind Umsetzungsprodukte von carboxylund hydroxylgruppenhaltigen Fettstoffen mit Ammoniak, ein- und mehrwertigen Aminen. Als Beispiele seien genannt: Ricinolsäureamid, 12-Hydroxystearinsäureethylendiamid, Hydroxymethoxystearinsäureoctylamid, Dihydroxystearinsäurebutylamid. Weiter sind dies Umsetzungsprodukte von carboxylgruppenhaltigen Fettstoffen mit Hydroxyaminen wie z.B. Kokosfettsäuremonethanolamid und Stearinsäurediethanolamid.

Nach einer dritten bevorzugten Ausführungsform der vorliegenden Erfindung weist der Fettstoff wenigstens eine Estergruppe auf. Dies sind zunächst synthetische Fettsäureester wie z.B. Trimethylolpropantrioleat, Rapsfettsäuremethylester, Glycerintricaprylat und Ölsäure-2-ethylhexylester. Weiter sind dies Umsetzungsprodukte von Fettsäureestem mit Dienophilen wie Acrylsäure-, Maleinsäure-, Fumarsäure- und Acetylendicarbonsäureestern, Styrol, Cyclopentadien, etc. Die Reaktion kann thermisch, radikalisch und photochemisch durchgeführt werden.

Auch geblasene Öle und Fette, radikalisch polymerisierte Fette, Leinöl-Standöl, vollständig dehydratisiertes Ricinusöl und daraus hergestellte Standöle, thermisch polymerisiertes Rüböl sind geeignet, wie vollständig mit einwertigen Carbonsäuren acyliertes Ricinusöl.

Schließlich sind hier Ester von Fettalkoholen mit ein- und mehrwertigen Carbonsäuren zu nennen. Es können auch carboxylgruppenhaltige Fettstoffe für die Veresterung mit den Fettalkoholen eingesetzt werden. Als Beispiele seien genannt: Oleyloleat, Distearyladipat, Oleylacetat.

Nach der dritten bevorzugten Ausführungsform der vorliegenden Erfindung weist der Fettstoff insbesondere neben wenigstens einer Estergruppe auch noch wenigstens eine Epoxidgruppe und wenigstens eine Ethergruppe auf. Hierunter fallen partiell mit ein- oder mehrwertigen Alkoholen ringgeöffnete, epoxydierte Fettsäureester, beispielsweise das Umsetzungsprodukt von Epoxistearinsäuremethylester mit einem Unterschuß an Octanol.

Nach einer weiteren bevorzugten Untergruppe der dritten bevorzugten Ausführungsform weisen die Fettstoffe neben wenigstens einer Estergruppe auch noch wenigstens eine Amingruppe auf. Unter diesen Fettstofftyp fallen Ester von hydroxylgruppenhaltigen tertiären Aminen wie z.B. Triethanolamin oder 3-Hydroxy-N-methylpyrrolidin mit Fettstoffen, die Carboxylgruppen enthalten. Die Produkte können durch Umsetzung mit Chloressigsäure, Methylhalogeniden, Dimethylsulfat etc, quatemiert und somit in amphiphile Verbindungen überführt werden.

Nach einer weiteren Untergruppe der bevorzugten dritten Fettstoffklasse fallen hierunter solche Fettstoffe, die neben wenigstens einer Estergruppe zusätzlich wenigstens eine Epoxidgruppe aufweisen. Dies sind partiell und vollständig epoxydierte Fettsäureester. Als Beispiele für derartige epoxydierte Fettsäureester seien genannt: Epoxystearinsäuremethylester, Epoxystearinsäure-2-ethylhexylester. Von den Glyceriden werden die Triglyceride bevorzugt, z.B. Sojaölepoxid, Leinölepoxid, Rübölepoxid, epoxydiertes Sonnenblumenöl.

Nach einer weiteren Unterklasse der dritten Klasse der erfindungsgemäßen Fettstoffe sind hierunter solche zu verstehen, die neben wenigstens einer Estergruppe auch wenigstens eine Anhydridgruppe aufweist. Dies sind Umsetzungsprodukte von Fettsäureestern, die in ihrem Alkohol oder Säureteil Doppelbindungen enthalten mit einem Dienophil, wie beispielsweise Maleinsäureanhydrid.

Nach einer vierten bevorzugten Ausführungsform weisen die erfindungsgemäßen Fettstoffe wenigstens eine Ethergruppe, vorzugsweise Alkylethergruppe mit 8 bis 26 Kohlenstoffatomen, insbesondere 12 bis 22 Kohlenstoffatomen auf. In an sich bekannter Weise erhält man derartige Ether, z.B. durch Williamson sche Ethersynthese oder Dehydratisierung mit sauren Katalysatoren, von gesättigten, ungesättigten und verzeigten Fettalkoholen. Als Beispiele für derartige Fettether seien genannt: Dioctylether, Didecylether, Distearylether, Dibehenylether.

Nach einer fünften bevorzugten Ausführungsform handelt es sich bei den fettchemischen Additiven um wenigstens einen wenigstens eine Amingruppe enthaltenden Fettstoff. Man erhält diese Amine durch Amidierung von Fettsäuren, Dehydratisierung und Reduktion. Als Beispiele für derartige Fettamine seien genannt: Stearylamin, Laurylamin. Die genannten Amine können auch durch Umsetzung mit Chloressigsäure, Methylhalogeniden, Dialkylsulfat etc, quaterniert werden. Als Beispiele seien genannt: Stearyltrimethylammoniumchlorid, Lauryltriethylammoniumsulfat.

Die fünfte bevorzugte Ausführungsform weist in einer ihrer Unterklassen solche Fettstoffe auf, die neben wenigstens einer Amingruppe zusätzlich auch noch wenigstens eine Amidgruppe besitzen. Dies sind beispielsweise Umsetzungsprodukte von epoxydierten Fettsäureestem mit ein- und mehrwertigen Aminen bei gleichzeitiger Amidierung der Esterfunktion. Als Beispiel sind Umsetzungsprodukte von Epoxistearinsäuremethylester mit Stearylamin genannt.

Nach einer sechsten bevorzugten Ausführungsform der vorliegenden Erfindung enthält der erfindungsgemäße Fettstoff wenigstens eine Amidgruppe. Dies sind Umsetzungsprodukte von carboxylgruppenhaltigen Fettstoffen mit Ammoniak, ein- und mehrwertigen Aminen. Als Beispiele seien genannt: Stearinsäureamid, Ölsäureamid, Stearinsäureethylendiamid,

Nach einer siebten bevorzugten Ausführungsform enthalten die erfindungsgemäßen Fettstoffe wenigstens eine Epoxidgruppe. Dies sind beispielsweise epoxydierte Produkte von Alkylverbindungen mit wenigstens einer Doppelbindung, die 8 bis 26 Kohlenstoffatome aufweisen. Beispielsweise ist dies 1-Epoxyoctadecan.

Nach einer achten bevorzugten Ausführungsform handelt es sich bei dem fettchemischen Additiv um einen Fettstoff, der wenigstens eine Anhydridgruppe enthält. Derartige Substanzen werden in an sich bekannter Weise durch Dehydratisierung, z.B. unter Verwendung von Acetanhydrid, von Fettstoffen mit einer oder mehreren Säuregruppen. Als Beispiele für derartige Stoffe seien genannt: Distearinsäureanhydrid, Diölsäureanhydrid, Dimerfettsäureanhydrid.

Die neunte bevorzugte Ausführungsklasse der erfindungsgemäßen fettchemischen Additive enthält Fettstoffe, die wenigstens eine phosphororganischen Fettstoff enthalten. Dies sind insbesondere Ester der Phosphorsäure und der phosphorigen Säure mit hydroxylgruppenhaltigen Fettstoffen. Amide der Phosphorsäure und der Phosphoriger Säure mit amingruppenhaltigen Fettstoffen.

Nach einer zehnten bevorzugten Ausführungsform handelt es sich bei den fettchemischen Additiven um solche, die eine bororganische Fettstoffverbindung enthalten. Dies sind beispielsweise Ester der Borsäure mit mit hydroxylgruppenhaltigen Fettstoffen. Die Verbindungen können z.B. durch Umsetzung mit Borsäure und Natriumborat hergestellt werden.

Nach einer elften bevorzugten Ausführungsform handelt es sich bei den fettchemischen Additiven um einen wenigstens eine schwefelorganische Verbindung enthaltenden Fettstoff. Dies sind Ester der Schwefelsäure (Sulfate) und der Schwefligen Säure (Sulfite) mit hydroxylgruppenhaltigen Fettstoffen. Weiter sind dies Umsetzungsprodukte von Fettstoffen mit aktivierten Gruppen (Doppelbindungen, α-Methylengruppen) mit Chlorsulfonsäure, Schwefeltrioxid bzw. Oleum zu Sultonen und Sulfonsäuren. Umsetzungsprodukte von ungesättigten Fettsäureestem mit elementarem Schwefel und Schwefeldichlorid. Als Beispiele seien genannt: Sulfatiertes Rüböl, Sulfonate von Fettsäureestern, Fettalkoholsulfate, das Umsetzungsprodukt von Leinöl und Schwefel (brauner und weißer Faktis), sulfatiertes Ricinusöl (Türkischrot Öl).

Nach einer zwölften bevorzugten Ausführungsform handelt es sich bei dem fettchemischen Additiv um einen wenigstens eine Urethangruppe enthaltenden Fettstoff. Diese werden erhalten durch Umsetzung von hydroxylgruppenhaltigen Fettstoffen mit ein- und mehrwertigen Isocyanaten, gegebenfalls unter Verwendung üblicher Katalysatoren, zu monomeren oligomeren und polymeren Produkten. Als Beispiele seien genannt: Reaktionsprodukte von Ricinusöl mit Diphenylmethandiisocyanat, das Reaktionsprodukt von 1-Octanol und Methylisocyanat.

Nach einer dreizehnten bevorzugten Ausführungsform der vorliegenden Erfindung handelt es sich bei dem fettchemischen Additiv um einen wenigstens eine Ketogruppe enthaltenden Fettstoff. Dies sind Fettstoffe, die sich aus der Umlagerung von epoxydierten Fettsäureestem mit Lewis-Säuren oder Lithiumsalzen ergeben bzw. deren Folgeprodukte. Als Beispiele seien Ketostearinsäuremethylester, 9-Ketostearinsäure genannt. Die entsprechenden Ester können auch durch Isomerisierung von Ricinolsäurederivaten gewonnen werden.

Fettketone können auch aus Fettsäuren nach einschlägigen Methoden der präparativen organischen Chemie hergestellt werden, z.B. durch Pyrolyse von Fettsäuremagnesiumsalzen bei Temperaturen oberhalb 300°C unter Abspaltung von CO₂ und Wasser (DE-OS 2553900). Als Beispiele seien genannt: Distearylketon (Stearon) und Dibehenylketon (Behenon)

Unter einwertigen Carbonsäuren im Sinne der vorliegenden Erfindung sind z.B. folgende Verbindungen zu verstehen:
Ameisen-, Essig-, Propion-, Butter-, Valerian-, Capron-, Önanth-, Capryl-, Pelargon-, Caprin-, Undecan-, Laurin-, Tridecan-, Myristin-, Pentadecan-, Palmitin-, Margarin-, Stearin-, Nonadecan-, Arachin-, Behen-, Lignocerin-, Cerotin- und Melissinsäure, Benzoesäure, Substituierte Benzoesäurederivate, 4-Hydroxybenzoesäure, Dichlorpropionsäure, 2-Hydroxypropionsäure, 3-Hydroxypropionsäure, Hydroxyessigsäure, Salicylsäure, Chlorvaleriansäure, 4-Hydroxybuttersäure, Mandelsäure, Phenylessigsäure, Gallussäure, Zimtsäure, Harzsäuren aus Kolophonium- und Tallharzen, wie z. B. Abietinsäure.

Unter mehrwertigen Carbonsäuren im Sinne der vorliegenden Erfindung sind z.B. folgende Verbindungen zu verstehen:
Oxalsäure, Malonsäure, Bemsteinsäure, Pimelinsäure, Maleinsäure, Fumarsäure, Glutarsäure, Adipinsäure, Korksäure, Sebacinsäure, 1,11-Undecandisäure, 1,12-Dodecandisäure, Phthalsäure, Isophthalsäure, Terephthalsäure, Tetrachlorphthalsäure, Hexahydrophthalsäure, Tetrahydrophthalsäure, Dimerfettsäure, Trimerfettsäure, Tartronsäure, Äpfelsäure, Acetylendicarbonsäure, Weinsäure, Citronensäure.

Unter einwertigen Alkoholen im Sinne der vorliegenden Erfindung sind z.B. folgende Verbindungen zu verstehen:
Methanol, Ethanol, Propanol, Butanol, Pentanol, 2-Ethylhexanol, 2-Octanol, Monophenylglykol, Abietylalkohol, Polyethylenglykolmonoalkylether, Cyclohexanol.

Unter mehrwertige Alkoholen im Sinne der vorliegenden Erfindung sind z.B. folgende Verbindungen zu verstehen:
1,2-Ethandiol, 1,2-Propandiol, 1,3-Propandiol, 1,4-Butandiol, 2,3-Butandiol, 1,5-Pentandiol, 1,6-Hexandiol, 1,8-Octandiol, Diethylenglykol, Neopentylglykol, 1,4-Bishydroxymethyl-cyclohexan, 2-Methyl-1,3-propandiol, 1,2,6-Hexantriol, Glycerin, Diglycerin, Polyglycerin, Trimethylolpropan, Trimethylolethan, Pentaerythrit, Sorbit, Formit, Methylglycosid, Dimerdiol, Trimertriol, Glucose, Alkylpolyglucoside, Di- und Polysaccaride. Alle genannten Alkohole können auch als EO- oder PO-Addukte verwendet werden. Polyethylen-, Polypropylen- und Polybutylenglykole, Cyclohexandiol, EO/PO-Blockpolymere (Pluronic® bzw. Pluriol®-Typen).

Unter einwertigen Aminen im Sinne der vorliegenden Erfindung sind z.B. folgende Verbindungen zu verstehen:
Methylamin, Dimethylamin, Ethylamin, Butylamin, Stearylamin, Oleylamin, Aminobenzol bzw. substituierte Derivate, Aminocyclohexan und Pyrrolidin.

Unter mehrwertigen Aminen im Sinne der vorliegenden Erfindung sind z.B. folgende Verbindungen zu verstehen:
Ethylendiamin, Tetramethylendiamin, Pentamethylendiamin, Hexamethylendiamin, Diethylentriamin, Triethylentetramin, 1,2-Diaminocyclohexan, 1,4-Diaminocyclohexan, 1,3-Diamino-2,2-dimethylpropan, 2,5-Diamino-2,5-dimethylhexan, 1,10-Diaminodecan, 1,4-Diaminobutan, 12-Diaminododecan, Diamin aus Dimerfettsäure, 1,8-Diaminooctan, 1,8-Diamino-p-menthan, 1,5-Diaminopentan, 1,3-Diamino-2-propanol, 1,3-Diaminoadamantan, Phenylendiam, Diaminobenzol.

Unter Hydroxyaminen im Sinne der vorliegenden Erfindung sind z.B. folgende Verbindungen zu verstehen:
Monoethanolamin, Diethanolamin, 1,6-Hexanolamin, 2-Aminocyclohexanol, 4-Aminocyclohexanol, Hydroxymethylpyrrolidin.

Unter einwertigen Isocyanaten im Sinne der vorliegenden Erfindung sind z.B. folgende Verbindungen zu verstehen:
Phenylisocyanat, Alkylisocyanat, Isocyanatoessigsäureethylester, Tolylisocyanat und durch Umsetzung von mehr-, insbesondere zweiwertigen Isocyanaten und einwertigen Alkoholen bzw. Aminen erhältliche Verbindungen mit einer Isocyanatgruppe.

Unter mehrwertigen Isocyanaten im Sinne der vorliegenden Erfindung sind z.B. folgende Verbindungen zu verstehen, die im Mittel 2 bis höchstens 4 NCO-Gruppen enthalten. Beispielsweise seien als geeignete Isocyanate genannt 1,5-Naphthylendiisocyanat, 4,4 -Diphenylmethandiisocyanat (MDI), hydriertes MDI (H₁₂MDI), Xylylendiisocyanat (XDI), Tetramethylxylylendiisocyanat (TMXDI), 4,4'-Diphenyldimethylmethandiisocyanat, Di- und Tetraalkyldiphenylmethandiisocyanat, 4,4' ,-Dibenzyldiisocyanat, 1,3-Phenylendiisocyanat, 1 ,4-Phenylendiisocyanat, die Isomeren des Toluylendiisocyanats (TDI), gegebenenfalls in Mischung, 1-Methyl-2,4-diisocyanatocyclohexan, 1 ,6'-Diisocyanato-2,2,4-trimethylhexan, 1,6-Diisocyanato-2,4,4-trimethylhexan, 1'-Isocyanatomethyl-3'-isocyanato-1,5,5'-trimethyl-cyclohexan (IPDI), chlorierte und bromierte Diisocyanate, phosphorhaltige Diisocyanate, 4,4'-Diisocyanatophenylperfluorethan, Tetramethoxybutan-1,4-diisocyanat, Butan-1,4-diisocyanat, Hexan-1,6-diisocyanat (HDI),Dicyclohexylmethandiisocyanat, Cyclohexan-1,4-diisocyanat, Ethylendiisocyanat, Phthalsäure-bis-isocyanatoethylester, ferner Polyisocyanate mit reaktionsfähigen Halogenatomen, wie 1-Chlormethylphenyl-2,4-diisocyanat, 1-Brommethylphenyl-2,6-diisocyanat, 3,3-Bischlor-4,4'diphenyldiisocyanat. Schwefelhaltige Polyisocyanate erhält man beispielsweise durch Umsetzung von 2 mol Hexamethylen-diisocyanat mit 1 mol Thiodiglykol oder Dihydroxydihexylsulfid. Weitere wichtige Diisocyanate sind Trimethylhexamethylendiisocyanat, 1 ,4-Diisocyanatobutan, 1 ,12-Diisocyanato-dodecan und Dimerfettsäurediisocyanat. Interesse verdienen teilweise verkappte Polyisocyanate, welche die Bildung selbstvernetzender Polyurethane ermöglichen, z.B. dimeres Toluylendiisocyanat, oder mit beispielsweise Phenolen, tertiärem Butanol Phthalimid, Caprolactam partiell oder vollständig umgesetzte Polyisocyanate.

Hierbei versteht es sich von selbst, daß nicht nur Mischungen von gipschemischen Additiven innerhalb jeder Klasse, sondern natürlich auch eine Mischung von beliebigen Komponenten der einzelnen Klassen untereinander möglich ist.

Das vorgenannte gipschemische Additiv läßt sich mit Gips und gegebenenfalls weiteren Inhaltsstoffen auf verschiedene Weise hinzufügen. Hier kommt zunächst die sogenannte einkomponentige Variante in Betracht, wo die fertige Gipszusammensetzung Gips, das gipschemische Additiv sowie die weiteren Hilfs- und Zusatzstoffe enthält. Der Anwender muß daher nur noch Wasser hinzufügen, so daß diese Variante besonders bevorzugt ist. Die fettchemischen Bestandteile können entweder rein physikalisch mit dem Gipspulver und den weiteren Hilfsund Zusatzstoffen vermengt werden. Alternativ wäre es aber auch möglich, diese Komponenten auf den Gips aufzubringen bzw. ihn daran zu adsorbieren oder zu coaten, d. h. bei Temperaturen oberhalb RT (> 25 °C) aufbringt.

Alternativ bietet sich natürlich auch eine zweikomponentige Variante vor Ort an, wo der Gips mit Wasser vor der Wasserzugabe nachher oder gleichzeitig mit den fettchemischen Bestandteilen und den weiteren Hilfs- und Zusatzstoffen gemischt wird.

Nach einer dritten bevorzugten Ausführungsform der vorliegenden Erfindung werden die Salze von carboxylhaltigen Fettstoffen, beispielsweise der entsprechenden Fettsäuren mit Aminen, beispielsweise Monoethanolamin, bei Raumtemperatur zugemischt und können sich dann, beispielsweise bei der Herstellung von Gipskartonplatten, unter Wasserabspaltung zu den entsprechenden Aminen umsetzen.

Wie bereits vorstehend erörtert, können die vorgenannten fettchemischen Additive mit Carboxylgruppen, also solche der ersten Klasse, als solche als auch in Form ihrer Salze eingesetzt werden. Das Gegenion der Carboxylgruppe eignen sich sowohl anorganische Ionen wie ein- oder mehrwertige Metallionen oder Ammoniak wie auch die entsprechenden organischen Basen, wie Alkanolamine, Amine usw.

Die Salzherstellung erfolgt analog wie die Herstellung von Metallseifen aus den Säuren und den Metall- bzw. Aminverbindungen unter leicht bis stark alkalischen Bedingungen. Oftmals werden auch die Oxide bzw. Hydroxide in äquimolaren Mengen zur Salzbildung eingesetzt. Diese Salzbildung kann auch in situ bei der Gips-Wasser-Anmischung erfolgen. Desweiteren ist eine Umsalzung, d. h. beispielsweise die Umwandlung von Natriumseifen bzw. -salzen zu Calciumsalzen oder anderen, möglich. In Ullmann, Encyclopedia of Technical Chemistry, Band A 16, Seite 361 ff., werden in dem Übersichtsartikel "Metallic Soap" Salzbildungsprozesse beschrieben.

Bei solchen fettchemischen Additiven, die Fettstoffe mit wenigstens einer Amingruppe enthalten, kann über eine Alkylierung bzw. Protonierung mittels Säuren eine entsprechende Salzbildung erfolgen. Bei fettchemischen Additiven, die neben wenigstens einer Amingruppe auch noch wenigstens eine Carboxylgruppe enthalten, kann sogar eine innere Salzbildung ablaufen. Da sowohl Calciumsulfatsemihydrat wie auch Calciumsulfatdihydrat eine gewisse Löslichkeit in Wasser besitzen, liegen freie Calciumionen vor, die ebenfalls mit den Carboxylgruppen nachträglich Salze bilden können.

Darüber hinaus enthalten Gipse, wie sich beispielsweise aus dem Referat in "Chemie in unserer Zeit", Band 19 (1985), Seite 137 bis 143, ergibt, auch andere Metallionen wie beispielsweise Natrium, Magnesium, Kalium, Strontium, Lithium, Rubidium, Eisen(II), Barium, Molybdän(II), Zink, Aluminium und Mangan(II), die ebenfalls mit carboxylgruppenhaltigen Fettstoffen während der Gipsabmischung oder auch nach der Aushärtung Salze bilden können. Die Salzbildung kann beim Gipsanrühren erfolgen, wenn die zur Salzbildung befähigten Stoffe wie z. B. carboxylgruppenhaltige Fettstoffe und Basen (z. B. Ca(OH)₂, Amine) gleichzeitig oder zeitversetzt zugegeben werden. Bei aminhaltigen Fettstoffen müssen die entsprechenden Säuren zugegeben werden.

Weitere Bestandteile der gipshaltigen Zusammensetzungen sind beispielsweise übliche Füll-, Hilfs- und Zusatzstoffe, die je nach Verwendungszweck variieren. Dies sind zunächst mineralische und/oder anorganische Füllstoffe, wie z. B. Tone, Sand, Kies, Zement, Schlacke, Glas, Kieselgele, Sulfate (z. B. Calciumsulfatdihydrat), Oxide (z. B. Magnesiumoxid, Calciumoxid), Glas- und Mineralfasem, Kunststoff-Fasern, Mikrohohlkugeln, organische Leichtfüllstoffe (z. B. Polystyrolschaum), Granulate (feingemachten) aus Recyclinganlagen, Papierpulver, Holzspäne und -mehle, Cellulosefasem, usw. Auch Konservierungsmittel, Rostschutzmittel und Farbstoffe kommen als Additive in Frage.

Als weiterer Bestandteil der gipshaltigen Zusammensetzung können Trockenstoffe zugesetzt werden, wie sie üblicherweise in Anstrichstoffen, Fimissen und Druckfarben eingesetzt werden. Nach dem 55901 (März 1988) versteht man hierunter in organischen Lösungs- und Bindemitteln lösliche Metallsalze organischer Säuren, die oxidativ trocknenden Erzeugnissen zugesetzt werden, um den Trocknungsprozeß zu beschleunigen. Diese Trockenstoffe gehören chemisch zu den Metallseifen und können sowohl in fester als auch in gelöster Form als sogenannte Sikkative vorliegen. Sie können aber auch in wasseremulgierbarer Form in Kombination mit Emulgatoren appliziert werden. Als Säurekomponente können beispielsweise aliphatische Carbonsäuren wie Octansäure oder Fettsäuren, Naphthensäuren und auch Harzsäuren eingesetzt werden. Als primäre Trockenstoffe, die die Oxidation der Fettstoffe direkt beschleunigen, werden entsprechende Salze von Kobalt, Mangan oder Blei, vorzugsweise aber Kobalt oder Mangan eingesetzt. Als sekundäre Trockenstoffe, die allein keine katalytische Wirkung besitzen, jedoch in Kombination mit den vorgenannten Trockenstoffen synergistisch wirken, können Salze von Zink, Eisen, Calcium, Cer, Blei und Barium eingesetzt werden. Als koordinative Trockenstoffe können schließlich Salze von Zirkonium und Aluminium eingesetzt werden. Beispiele für handelsübliche Trockenstoffe sind die Handelsprodukte Additol VXM 6206 und 4940, Solingen, Cobalt 10, Leinölfirnis, Nuodex Cerium 6 und Zink 8, Alusec 591 und Nourydrier 973. Auf die vorgenannten Salze kann jedoch verzichtet werden, wenn die wenigstens eine Carboxylgruppe enthaltenden Fettstoffe eingesetzt werden. Dann können anorganische Salze, beispielsweise Hydroxide, der vorgenannten Metalle eingesetzt werden, so daß sich die Trockenstoffe in situ bilden. Üblicherweise werden die Trockenstoffe in Mengen von 0,01 Gew.-% bis 1 Gew.-%, bezogen auf das Fettstoffadditiv, eingesetzt.

Weitere Bestandteile der Gipszusammensetzung sind benetzend wirkende Substanzen, die den Wasserbedarf herabsetzen und üblicherweise Verflüssiger genannt werden. Beispiele sind Alkylarylsulfonate, ligninsulfonsaure Salze oder Melaminharze. Eine Übersicht hierüber gibt beispielsweise der Artikel in "Zement, Kalk, Gips", Band 21, Seite 415 bis 419 (1968). Diese Verflüssiger werden üblicherweise in Mengen von 0 bis 10 % der Zusammensetzung hinzugefügt.

Auch eine Erhöhung des Wasserbedarfs ist möglich durch Zusatz von flockend wirkenden Stoffen, beispielsweise Polyethylenoxiden, wie sie beispielsweise im GB-A-1049184 beschrieben sind. Diese Hilfsstoffe können in Mengen von 0 bis 10 Gew.-%, bezogen auf die Trockenmischung, zugegeben werden.

Die Stabilisierung eines Wasser-Gips-Breis, um eine Sedimentation oder Entmischung zu vermeiden, gelingt durch Zusatz von verdickend wirkenden Chemikalien, beispielsweise Cellulose- und Stärkeethem. Diese beeinflussen den Wasserbedarf kaum. Diese Verdicker werden der erfindungsgemäßen Trockenmischung in Mengen von 0 bis 5 Gew.-%, bezogen auf die Trockenmischung, zugesetzt. Auch Polymerdispersionen können dem Gips beim Anrühren zugesetzt werden, insbesondere, um Elastizität und Haftung zu verbessern.

Weiterhin können die Zusammensetzungen Hilfsstoffe enthalten, die als Beschleuniger wirken. Dies sind insbesondere viele anorganische Säuren und ihre Salze, insbesondere Schwefelsäure und ihre Salze. Eine besondere Stellung nimmt hierbei das Calciumsulfat-dihydrat ein, welches in feiner Verteilung stark beschleunigend wirkt und deshalb beim Brennen von Rohgips vollständig entfernt werden muß. Die beschleunigende Wirkung dieser Substanzen beruht meistens auf einer Erhöhung der Löslichkeit und der Lösungsgeschwindigkeit des gebrannten Gipses sowie auf einer Erhöhung der Keimbindungsgeschwindigkeit.

Weitere Hilfsstoffe in der gipshaltigen Zusammensetzung sind bekannte Verzögerer, die den Versteifungs- und Erhärtungsvorgang verlangsamen. Zu ihnen gehören vor allem organische Säuren und ihre Salze sowie organische Kolloide, die z. B. auch als Abbauprodukte bei der Hydrolyse von hochmolekularen Naturstoffen, beispielsweise Eiweißstoffen entstehen, aber auch Salze der Phosphorsäure oder der Borsäure. Auch Dextrine sowie Eibischwurzel kommen in Frage. Der Mechanismus der Verzögerung ist verschieden. Höhermolekülare Kolloide verlängern die Induktionsperiode, da sie Keimgifte sind; andere Verzögerer verlangsamen die Lösungsgeschwindigkeit des Halbhydrats und das Wachstum der Dihydrat-Kristalle. Eine Verzögerung von Anhydrid II ist meist nicht von praktischem Interesse, da dieser bereits langsam genug in Dihydrat übergeht und immer beschleunigt werden muß. Der Anteil dieser Komponente in den Gipszusammensetzungen kann 0 bis 5 Gew.-%, bezogen auf die Trockenmischung, ausmachen.

Die Menge des eingesetzten Wassers hängt, wie dem Fachmann bekannt, von der Art des eingesetzten Gipsausgangsmaterials ab, d. h., zur Erzielung eines fließfähigen Breis von gleicher Konsistenz benötigt ein Drehofen-β-Gips mehr als ein Kochergips, dieser mehr als ein Mehrphasengips und dieser wiederum mehr als ein Autoklavengips. Die Wassermenge hat darüber hinaus auch einen wesentlichen Einfluß sowohl auf das Raumgewicht wie auch auf die Festigkeit des entstehenden Gipsprodukts. α-Gipse, die mit ganz geringen Mengen Wasser formbar sind, ergeben hier ohne spezielle Maßnahmen Gipsprodukte von hohem Raumgewicht und hoher Festigkeit, die wegen ihrer nicht gewollten Sprödigkeit in der Bauindustrie vermieden werden. β-Gipse und Mehrphasengipse benötigen für eine fließfähige Konsistenz mehr Wasser als α-Gipse. Sie ergeben deshalb Gipsprodukte mittlerer Festigkeit und höherer Elastizität bei geringeren Raumgewichten, wie sie in der Bauindustrie überall verwendet werden. Zur Herstellung von Leicht- oder Porengips können z. B. Wasserstoffperoxid (O₂-Entwicklung) oder verdünnte Säuren und Carbonate (CO₂-Entwicklung) zugegeben werden.

Die gipshaltige Zusammensetzung enthält neben Gips und fettchemischen Additiven weiterhin 0 bis 80 %
Füllstoff, 0 bis 2 % eines Benetzungsmittels,
0 bis 5 % eines Verflüssigers,
0 bis 5 % eines Beschleunigungsmittels,
0 bis 5 % eines Verzögerungsmittels,
jeweils bezogen auf die Gesamtmischung.

Der vorliegenden Erfindung liegt weiterhin die Aufgabe zugrunde, die gipshaltigen Zusammensetzungen für die Herstellung von Gipsprodukten einzusetzen.

Dies sind einmal die sogenannten vorgefertigten Gipsbauteile, die in Form von Gipskartonplatten, Gipswandbauplatten und Gipsdeckenplatten in der Bauindustrie vielfache Verwendung finden. Eine Übersicht gibt hierüber Ullmann's Enzyklopädie der technischen Chemie, Band 12, Seite 307 (1976). Weiterhin können die gipshaltigen Zusammensetzungen in Form von Spachtelmassen und Putzgips eingesetzt werden und hierbei insbesondere bei der Weiterverarbeitung zu Maschinenputzgipsen und Fertigputzgipsen. Schließlich können die gipshaltigen Zusammensetzungen auch für Fußbodenestriche, Strebstreckendämme im Bergbau und, soweit diese auf α-Gips basieren, als Hartformenmaterial in der Dachziegelindustrie, in Metallgießereien und in der Dentaltechnik eingesetzt werden. Eine Übersicht hierüber gibt Ullmann's Enzyklopädie der technischen Chemie, Band 12, Seite 308 f. (1976).

Die vorliegende Erfindung wird nachfolgend durch Ausführungsbeispiele näher erläutert.

Die nachstehenden fettchemischen Additive wurden hinsichtlich ihrer Abbindezeit und Wasseraufnahmezeit als Bestandteil in gipshaltigen Zusammensetzungen untersucht.

Bei den nachstehend beschriebenen Herstellungsbeispielen wurde die Gelpermeationschromatographie (GPC) mittels einer PL-Gel-Vorsäule (30 x 8,7 mm), 2 x PL-Gel-Säule 100 A (300 x 7,8 mm), 2 x PL-Gel-Säule 50 A (300 x 7,8 mm) durchgeführt. Als Laufmittel diente Tetrahydrofuran bei einer Durchflußrate von 1 ml/min bei 40 °C. Die Detektion erfolgte über den Brechungsindex, und eine Kalibrierung erfolgte mit Polyethylenglykolen. Angegeben ist in den nachstehenden Beispielen, soweit gemessen, sowohl das Gewichtsmittel (M_{w}) sowie das Zahlenmittel (Mₙ).

In Klammem ist hinter dem Additiv ergänzt, unter welche der bevorzugten Additivklassen dies fällt.
1 Polymerisierte Rübölfettsäure [Additivklasse 1]
2 Umsetzungsprodukt von Sojaöl mit Maleinsäureanhydrid im Molverhältnis 1:2 [Additivklasse 3]
3 Epoxydiertes Sojaöl (Edenol D 81, Handelsprodukt der Henkel KGaA) [Additivklasse 3]
4 Umsetzungsprodukt von Sojaöl mit Maleinsäureanhydrid im Molverhältnis 1:2,5 [Additivklasse 3]
5 Umsetzungsprodukt von Ricinusöl mit Maleinsäureanhydrid im Molverhältnis 1:2 [Additivklasse 1]
6 Umsetzungsprodukt von Ricinusöl mit Phthalsäureanhydrid im Molverhältnis 1:2 [Additivklasse 1]
7 Magnesiumsalz der Dimerfettsäure [Additivklasse 1]
8 Umsetzungsprodukt von Ricinusöl mit Acrylsäure [Additivklasse 1]
9 Umsetzungsprodukt von Ricinusöl mit Fumarsäure [Additivklasse 1]
10 Umsetzungsprodukt von Ricinusöl mit Phosphorpentoxid [Additivklasse 9]
11 Umsetzung des Ringöffnungsprodukt von epoxydiertem Sojaöl mit Methanol mit Maleinsäureanhydrid im Molverhältnis 1:1 [Additivklasse 1]
12 Umsetzung des Ringöffnungsprodukt von epoxydiertem Sojaöl mit Methanol mit Phthalsäureanhydrid im Molverhältnis 1:1 [Additivklasse 1]
13 Umsetzungsprodukt von epoxydiertem Sojaöl mit 4-Hydroxybenzoesäure und eine destillierte Fettsäure mit 7% C-10, 48 % C-12, 19 % C-16, 7% C-18, sonstige 10 %, ein Handelsprodukt der Henkel KGaA (Edenor K 8-18) [Additivklasse 1]
14 Freie Säure des Umsetzungsprodukts von Epoxystearinsäuremethylester mit Glykol im Molverhältnis 1:2 [Additivklasse 1]
15 Freie Säure des Umsetzungsprodukts von Epoxystearinsäuremethylester mit einem Ethylenoxid/Propylenoxid-Blockpolymeren der BASF AG (20 % EO, MG = 2.500 g/mol (Pluronic PE 6200) [Additivklasse 1]
16 Umsetzungsprodukt von Ricinusöl mit Citronensäure [Additivklasse 1]
17 Freie Säure des Umsetzungsprodukts von Epoxystearinsäuremethylester mit Glykol im Molverhältnis 2:1 [Additivklasse 1]
18 Dimerfettsäure aus Empol 1022, Handelsprodukt der Henkel KGaA mit Verseifungszahl = 193 auf Basis technischer Ölsäure und Linolsäure [Additivklasse 1]

### Herstellung von Additiv 1

872 g neues Rüböl (Verseifungszahl = 193) wurden in einem 2 Liter Vierhals-Kolben mit Rückflußkühler, Tropftrichter und Wasserabscheider auf 160°C erhitzt. Dann wurden bei dieser Temperatur innerhalb von 3 h 146,2 g Di-tert.-butylperoxid zugegeben und das entstehende tert.-Butanol über Wasserabscheider abgetrennt. Die Reaktionsmischung wurde während dieser Zeit immer viskoser und war am Ende nicht mehr rührbar. Nach dem Abkühlen erhielt man 843 g einer gelben, gelartigen Substanz mit einer lodzahl = 57. Das GPC ergab M_{w} = 5300 und Mₙ = 2542.

206 g des polymeren Rüböls wurden in einem 2 Liter Dreihals-Kolben mit Rückflußkühler mt 77 g 50 %iger NaOH, 300 ml Wasser und 600 ml Ethanol 10 h am Rückfluß gekocht. Die bräunlich klare Reaktionsmischung wurde am Rotationsverdampfer zur Trockene eingeeingt. Der erhaltene Feststoff wurde in 1 l Wasser aufgenommen und mit 10%iger Salzsäure auf pH 1 eingestellt. Die wäßrige Phase wurde mit 800 ml Tetrahydrofuran extrahiert. Dann wurde die organische Phase mit Wasser neutral gewaschen und über Na₂SO₄ getrocknet. Nach Einengen der Lösung erhielt man 150 g der polymerisierten Rübölfettsäure (1) als braune, viskose Flüssigkeit mit einer Säurezahl von 202 und einer lodzahl von 94. Das GPC ergab M_{w} = 904 und Mₙ = 698.

### Herstellung von Additiv 5

1860 g (2 mol) Ricinusöl werden mit 392 g (4 mol) Maleinsäureanhydrid unter Stickstoff 2 h bei 120°C erhitzt. Nach dem Abkühlen erhält man 2200 g des Produkts als gelbe, niedrigviskose Flüssigkeit mit Säurezahl = 102, lodzahl = 69 und Verseifungszahl = 344. Viskosität = 8600 mPas (Höppler, 20°C)

### Herstellung von Additiv 6

1860 g (2 mol) Ricinusöl werden mit 592 g (4 mol) Maleinsäureanhydrid unter Stickstoff 2 h bei 120°C erhitzt. Nach dem Abkühlen erhält man 2400 g des Produkts als gelb-braune, hochviskose Flüssigkeit mit Säurezahl = 93, lodzahl = 64, Hydroxylzahl = 32 und Verseifungszahl = 318. Viskosität = 35400 mPas (Höppler, 20°C)

### Herstellung von Additiv 7

Durch Umsetzung von 100 g der Dimerfettsäure 18 Empol 1022, Handelsprodukt der Henkel KGaA mit Verseifungszahl = 193 auf Basis technischer Ölsäure und Linolsäure mit 10 g Magnesiumhydroxyd

### Herstellung von Additiv 8

640 g Ricinusöl (Verseifungszahl = 177, 0,7 mol) wurden in einem 2 Liter Dreihals-Kolben mit Rückflußkühler und Tropftrichter unter Stickstoff auf 150°C erhitzt. Dann wurde bei dieser Temperatur innerhalb von 4 h ein Gemisch von 52,5 g Di-tert.butylperoxid und 310 g Ricinusöl langsam zugetropft. Nach Erniedrigung der Temperatur auf 100°C wurden tert.-Butanol und nicht reagierte Acrylsäure im Vakuum abdestilliert. Nach Behandlung mit dem Filterhilfsstoff Tonsil Optimum FF und Filtration erhielt man 900 g des Produkts als klare, rötlich gelbe Flüssigkeit mit Säurezahl = 31, lodzahl = 78 und Hydroxylzahl = 159.

### Herstellung von Additiv 9

Analog Herstellung von Additiv 8 mit 1200 g Ricinusöl (1,26 mol), 90 g Fumarsäure (0,8 mol) und 2,6 g g Di-tert.-butylperoxid wurden 1200 g eines Produkts als gelbe, leicht trübe, viskose Flüssigkeit mit Säurezahl = 55, lodzahl = 72, Verseifungszahl = 229 und Hydroxylzahl = 146 erhalten.

### Herstellung von Additiv 10

Durch Umsetzung von 475 g Ricinusöl mit 70 g Phosphorpentoxid. Das Produkt wurde charakterisiert durch Säurezahl = 161, Hydroxylzahl = 66.

### Herstellung von Additiv 11

Analog zur Herstellung von Additiv 10 aus 762 g (2,5 mol) Ringöffnungsprodukt von epoxydiertem Sojaöl mit Methanol (OHZ = 184) und 98 g (2,5 mol) Maleinsäureanhydrid. Als Produkt erhält man 850 g einer dunkelbraunen, hochviskosen Flüssigkeit mit Säurezahl = 81 und Verseifungszahl = 325.

### Herstellung von Additiv 12

Analog zur Herstellung von Additiv 11 aus 671 g (2,2 mol) Ringöffnungsprodukt von epoxydiertem Sojaöl mit Methanol (OHZ = 184) und 358 g (2,4 mol) Phthalsäureanhydrid. Als Produkt erhält man 1050 g eines dunkelbraunen Feststoffs mit Säurezahl = 58 und Verseifungszahl = 369.

### Herstellung von Additiv 13

Eine Mischung 155 g (1,1 mol) 4-Hydroxybenzoesäure und 228 g einer destillierten Fettsäure mit 7 % C-10, 48 % C-12, 19 % C-14, 9 % 16, 7 % C-18, sonstige 10 %, ein Handelsprodukt der Henkel KGaA (Edenor K 8/18) wird unter Stickstoff auf 160°C erhitzt und während 3 h mit 662 g (2,8 mol) epoxydiertem Sojaöl (Edenol D 81) versetzt. Nach dem Abkühlen erhält man 1030 g des Reaktionsprodukts als schmalzartige Substanz mit Säurezahl = 40, Verseifungszahl = 211 und Hydroxylzahl = 140.1

### Herstellung von Additiv 14

Ein Gemisch aus 53 kg (156 mol) Epoxystearinsäuremethylester (Edenor MeTiO5 Epoxid, 4,71% Epoxid), 19,3 kg (312 mol) Ethylenglykol und 17,2 g konz. Schwefelsäure werden unter Stickstoff ca. 1 h bei 100°C erhitzt. Dann wird bei dieser Temperatur mit 10 g 30 proz. Natriummethylat-Lösung neutralisiert und bei Erhöhung der Temperatur auf 200°C im Vakuum (2 Torr) andestilliert. Nach dem Abkühlen auf RT wird eine Lösung von13,5 kg 50 %ige NaOH (169 mol) in 20 kg Wasser zugegeben und 1 h bei 80-100°C gerührt. Nach Zugabe von 250 ml 13 %iger Natriumhypochlorit-Lösung wird bei 70°C mit 23,6 kg 35%iger Schwefelsäure neutralisiert. Nach dem Abtrennen der wäßrigen Phase wird mehrmals mit Wasser gewaschen und im Vakuum getrocknet. Man erhält 46 kg des Produkts als hellbraune, viskose Flüssigkeit mit
Säurezahl = 157, lodzahl = 10, Verseifungszahl = 162 und Hydroxylzahl = 253.

### Herstellung von Additiv 15

Analog zur Herstellung von Additiv 14 aus 398 g (1,2 mol) Epoxystearinsäuremethylester (Edenor MeTiO5 Epoxid, 4,71% Epoxid), 1025 g (0,4 mol) Glykol ergeben sich ca. 1200 g des Produkts als dunkelgelbe, festflüssige Substanz mit Säurezahl = 53, Verseifungszahl = 58 und Hydroxylzahl = 52.

### Herstellung von Additiv 16

1032 g (1 mol) Ricinusöl werden mit 187 g (1 mol) wasserfreier Citronensäure unter Stickstoff 2 h bei 180°C am Wasserabscheider erhitzt. Nach dem Abkühlen erhält man 1135 g des Produkts als gelbe, viskose Flüssigkeit mit Säurezahl = 70, lodzahl = 73, Verseifungszahl = 292 und Hydroxylzahl = 134

### Herstellung von Additiv 17

Analog zur Herstellung von Additiv 14 aus 60 kg (177 mol) Epoxystearinsäuremethylester (Edenor MeTiO5 Epoxid, 4,71% Epoxid), 5,5 kg (88,5 mol) Glykol ergeben sich ca. 60 kg des Produkts als gelbe, viskose Flüssigkeit mit Säurezahl = 177, Verseifungszahl = 180 und Hydroxylzahl = 140.

Die Messungen der Abbindegeschwindigkeit und das Wasseraufnahmevermögen wurden wie folgt durchgeführt:

70 ml Wasser wurden mit dem fettchemischen Additiv versetzt. Dann wurde unter kräftigem Rühren 140 g Gips (CaSO₄ x 0,5 H₂O) der Marke Alfor (Hersteller Börgardts-Sachsenstein, Dichte 2,63, Schüttdichte 900 g/l) zugegeben. Nachdem die Mischung homogen war, wurde in einer Aluminiumschale von 85 mm ∅ ein Prüfkörper gegossen und die Abbindegeschwindigkeit gemessen. Nach 48 stündiger Lagerung wurde die Wasseraufnahme gemessen, indem 10 ml Wasser in eine Vertiefung des Prüfkörpers gegeben und die Zeit (in min) des vollständigen Versickems bestimmt wurde. Der angegebene Prozentsatz Additiv bezieht sich auf die Gesamtmischung Wasser und Gips von 210 g. Bei diesem Test ist zu berücksichtigen, daß be einem Zeitwert von mehreren Stunden, wie es bei Additiv 1 möglich ist, ein großer Teil des Wassers auch verdunstet.

Die Ergebnisse sind aus der folgenden Tabelle ersichtlich:
Alle fettchemischen Additive wirken als Abbindeverzögerer und teilweise gleichzeitig als Hydrophobierungsmittel.

| **Additiv** | **Konzentration Gew.-%** | **Abbindezeit min.** | **Wasseraufnahmezeit min.** |
|---|---|---|---|
| | 0 | 14 | 2,08 |
| **1** | 0,25 | 26 | 2,63 |
| **1** | 0,5 | 24 | 2,93 |
| **1** | 0,75 | 28 | 3,05 |
| **1** | 1 | 29 | 3,42 |
| **1** | 2,5 | 30 | 13,85 |
| **1** | 5 | 35 | 496,00 |
| **1** | 10 | 35 | 86,00 |
| **2** | 0,1 | 21 | 3,15 |
| **2** | 0,25 | 25 | 3,15 |
| **2** | 0,5 | 27 | 3,30 |
| **2** | 0,75 | 32 | 4,20 |
| **2** | 1,32 | 27 | 5,45 |
| **2** | 4,76 | 45 | 18,45 |
| **2** | 9,1 | >300 | 26,15 |
| **3** | 4,76 | 38 | 5,30 |
| **4** | 4,76 | >240 | |
| **5** | 5,00 | 960 | |
| **6** | 5,00 | 22 | 1,98 |
| **7** | 5,00 | 24 | 15,33 |
| **8** | 5,00 | 65 | 1,73 |
| **9** | 5 | 70 | 1,80 |
| **10** | 5 | 106 | 1,97 |
| **11** | 5 | 960 | |
| **12** | 5 | 20 | 1,90 |
| **13** | 5 | 26 | 5,03 |
| **14** | 5 | 960 | |
| **15** | 5 | 960 | |
| **16** | 5 | 133 | 2,50 |
| **17** | 5 | 36 | 9,00 |
| **18** | 5 | 25 | 14,00 |

## Patentansprüche

1. Verwendung wenigstens eines fettchemischen Additivs, welches ausgewählt ist aus
- wenigstens einem wenigstens eine Carboxylgruppe enthaltenden Fettstoff, der mindestens 8 Kohlenstoffatome mit einer Molmasse von 143 bis 20.000 aufweist und/oder dessen Salz
- wenigstens einem wenigstens eine Hydroxylgruppe enthaltenden Fettstoff, der mindestens 8 Kohlenstoffatome mit einer Molmasse von 130 bis 20.000 aufweist,
- wenigstens einem wenigstens eine Estergruppe enthaltenden Fettstoff, wobei der Säureteil und/oder der Alkoholteil mindestens 8 Kohlenstoffatome mit einer Molmasse von 158 bis 20.000 aufweist,
- wenigstens einem wenigstens eine Ethergruppe enthaltenden Fettstoff, wobei wenigstens einer der beiden Etherreste mindestens 8 Kohlenstoffatome mit einer Molmasse von 144 bns 20.000 aufweist,
- wenigstens einem wenigstens eine Aminogruppe oder ein quaternäres Ammoniumsalz enthaltenden Fettstoff, wobei wenigstens eine der 3 bzw. 4 um das Stickstoffatom angeordneten Gruppen mindestens 8 Kohlenstoffatome mit einer Molmasse von 129 bis 20.000 aufweist,
- wenigstens einem wenigstens eine Amidgruppe enthaltenden Fettstoff, wobei der Säurerest des Amides mindestens 8 Kohlenstoffatome mit einer Molmasse von 157 bis 20.000 aufweist,
- wenigstens einem wenigstens eine Epoxidgruppe enthaltenden Fettstoff, wobei dieser mindestens 8 Kohlenstoffatome mit einer Molmasse von 128 bis 20.000 aufweist,
- wenigstens einem wenigstens eine Anhydridgruppe enthaltenden Fettstoff, wobei dieser mindestens 8 Kohlenstoffatome mit einer Molmasse von 210 bis 20.000 aufweist,
- wenigstens einem phosphororganischen Fettstoff, der mindestens 8 Kohlenstoffatome mit einer Molmasse von 193 bis 20.000 aufweist,
- wenigstens einem bororganischen Fettstoff, der mindestens 8 Kohlenstoffatome mit einer Molmasse von 174 bis 20.000 aufweist,
- wenigstens einem schwefelorganischen Fettstoff, der mindestens 8 Kohlenstoffatome mit einer Molmasse von 164 bis 20.000 aufweist,
- wenigstens einem wenigstens eine Urethangruppe aufweisenden Fettstoff, der mindestens 8 Kohlenstoffatome mit einer Molmasse von 213 bis 20.000 aufweist und/oder
- wenigstens einen wenigstens eine Ketogruppe enthaltenden Fettstoff, der mindestens 8 Kohlenstoffatome mit einer Molmasse von 130 bis 20.000 aufweist,
- mit der Maßgabe, daß als wenigstens eine wenigstens eine Carboxylgruppe enthaltender Fettstoff keine höhere Fettsäure oder deren Salz allein eingesetzt wird,
- mit der weiteren Maßgabe, daß als wenigstens ein wenigstens eine Hydroxylgruppe enthaltender Fettstoff kein Fettalkohol oder ethoxylierter Fettalkohol allein eingesetzt wird,
- mit der weiteren Maßgabe, daß als wenigstens ein wenigstens eine Estergruppe enthaltender Fettstoff kein natürliches Fett oder Öl allein eingesetzt wird,
- mit der weiteren Maßgabe, daß als schwefelorganischer Fettstoff nicht ein Sulfonat eines C₁₀ bis C₁₆-Fettsäurealkylesters allein eingesetzt wird sowie
- mit der Maßgabe, daß als wenigstens ein wenigstens eine Amidgruppe enthaltender Fettstoff kein Ethylenoxidaddukt eines Fettsäureamids eingesetzt wird,
als Abbindeverzögerer für eine gipshaltige Zusammensetzung in einer Menge von 0,1 bis 30 Gew.-%, bezogen auf die trockene Gesamtmischung.

2. Verwendung nach Anspruch 1, **dadurch gekennzeichnet, daß** die gipshaltige Zusammensetzung, bezogen auf die trockene Gesamtmischung, 0,5 bis 15, insbesondere 1 bis 10 Gew.-% wenigstens eines fettchemischen Additivs enthält.

3. Verwendung nach den Ansprüchen 1 oder 2, **dadurch gekennzeichnet, daß** der wenigstens eine Carboxylgruppe enthaltende Fettstoff weiterhin wenigstens eine Hydroxylgruppe und gegebenenfalls eine Ester- oder Ethergruppe enthält.

4. Verwendung nach den Ansprüchen 1 oder 2, **dadurch gekennzeichnet, daß** der wenigstens eine Carboxylgruppe enthaltende Fettstoff weiterhin wenigstens eine Estergruppe und gegebenenfalls wenigstens eine Ether- oder wenigstens eine Anhydridgruppe enthält.

5. Verwendung nach den Ansprüchen 1 oder 2, **dadurch gekennzeichnet, daß** der wenigstens eine Carboxylgruppe enthaltende Fettstoff weiterhin eine Anhydridgruppe enthält.

6. Verwendung nach den Ansprüchen 1 oder 2, **dadurch gekennzeichnet, daß** der wenigstens eine Hydroxylgruppe enthaltende Fettstoff weiterhin wenigstens eine Estergruppe und gegebenenfalls wenigstens eine weitere Gruppe, ausgewählt aus wenigstens einer Aminogruppe, wenigstens einer Amidgruppe und wenigstens einer Anhydridgruppe enthält.

7. Verwendung nach den Ansprüchen 1 oder 2, **dadurch gekennzeichnet, daß** der wenigstens eine Hydroxylgruppe enthaltende Fettstoff weiterhin wenigstens eine weitere Gruppe enthält, die ausgewählt ist aus wenigstens einer Ethergruppe und wenigstens einer Amidgruppe.

8. Verwendung nach den Ansprüchen 1 oder 2, **dadurch gekennzeichnet, daß** der wenigstens einen Ester enthaltende Fettstoff wenigstens eine weitere Gruppe enthält, die ausgewählt ist aus wenigstens einer Amidgruppe, wenigstens einer Epoxidgruppe oder wenigstens einer Anhydridgruppe.

9. Verwendung nach Anspruch 1 oder 2, **dadurch gekennzeichnet, daß** der wenigstens eine Estergruppe enthaltende Fettstoff weiterhin wenigstens eine Epoxidgruppe und wenigstens eine Ethergruppe enthält.

10. Verwendung nach den Ansprüchen 1 oder 2, **dadurch gekennzeichnet, daß** der wenigstens eine Aminogruppe oder wenigstens eine quaternäre Ammoniumverbindung enthaltende Fettstoff weiterhin wenigstens eine Amidgruppe enthält.

11. Verwendung nach Anspruch 1 oder 2, **dadurch gekennzeichnet, daß** der phosphororganische Fettstoff ein Ester der Phosphor- oder phosphorigen Säure enthält.

12. Verwendung nach den Ansprüchen 1 oder 2, **dadurch gekennzeichnet, daß** der bororganische Fettstoff einen Borsäurefettester enthält.

13. Verwendung nach den Ansprüchen 1 oder 2, **dadurch gekennzeichnet, daß** der schwefelorganische Fettstoff einen Ester der Schwefelsäure oder der schwefligen Säure oder ein Umsetzungsprodukt von Fettstoffen mit aktivierten Gruppen mit Chlorsulfonsäure, Schwefeltrioxid bzw. Oleum enthält.

14. Verwendung nach den Ansprüchen 1 oder 2, **dadurch gekennzeichnet, daß** der wenigstens eine Urethangruppe enthaltende Fettstoff ein Umsetzungsprodukt von hydroxylgruppenhaltigen Fettstoffen mit ein- und/oder mehrwertigen Isocyanaten enthält.

15. Verwendung nach vorstehenden Ansprüchen, **dadurch gekennzeichnet, daß** die gipshaltigen Zusammensetzung Trockenstoffe in Mengen von 0,01 bis 1 Gew.-%, bezogen auf den Fettstoff, enthält.

16. Verwendung nach vorstehenden Ansprüchen, **dadurch gekennzeichnet, daß** die gipshaltige Zusammensetzung einen Gips auf Basis eines Naturgipses, eines Chemiegipses oder eines Gipses aus der Rauchgasentschwefelung enthält.

17. Verwendung nach Anspruch 16, **dadurch gekennzeichnet, daß** dieser Gips in Mengen von 20 bis 99,9 Gew.-%, bezogen auf die Gesamtmischung, vorhanden ist.

18. Verwendung nach vorstehenden Ansprüchen, **dadurch gekennzeichnet, daß** die gipshaltige Zusammensetzung weiterhin 0 bis 80 % Füllstoff,
0 bis 2 % eines Benetzungsmittels,
0 bis 5 % eines Verflüssigers,
0 bis 5 % eines Beschleunigungsmittels,
0 bis 5 % eines Verzögerungsmittels,
jeweils bezogen auf die Gesamtmischung, enthält.

## Claims

1. The use of at least one oleochemical additive selected from
- at least one fatty compound containing at least one carboxyl group and at least 8 carbon atoms with a molecular weight of 143 to 20,000 and/or a salt thereof,
- at least one fatty compound containing at least one hydroxyl group and at least 8 carbon atoms with a molecular weight of 130 to 20,000,
- at least one fatty compound containing at least one ester group, the acid component and/or the alcohol component containing at least 8 carbon atoms, with a molecular weight of 158 to 20,000,
- at least one fatty compound containing at least one ether group, at least one of the two ether groups containing at least 8 carbon atoms with a molecular weight of 144 to 20,000,
- at least one fatty compound containing at least one amino group or at least one quaternary ammonium salt, at least one of the three or four groups arranged around the nitrogen atom containing at least 8 carbon atoms, with a molecular weight of 129 to 20,000,
- at least one fatty compound containing at least one amide group, the acid component of the amide containing at least 8 carbon atoms, with a molecular weight of 157 to 20,000,
- at least one fatty compound containing at least one epoxide group and at least 8 carbon atoms with a molecular weight of 128 to 20,000,
- at least one fatty compound containing at least one anhydride group and at least 8 carbon atoms with a molecular weight of 210 to 20,000,
- at least one organophosphorus fatty compound containing at least 8 carbon atoms with a molecular weight of 193 to 20,000,
- at least one organoboron fatty compound containing at least 8 carbon atoms with a molecular weight of 174 to 20,000,
- at least one organosulfur fatty compound containing at least 8 carbon atoms with a molecular weight of 164 to 20,000,
- at least one fatty compound containing at least one urethane group and at least 8 carbon atoms with a molecular weight of 213 to 20,000 and/or
- at least one fatty compound containing at least one keto group and at least 8 carbon atoms with a molecular weight of 130 to 20,000,
- with the proviso that a higher fatty acid or salt thereof is not used on its own as the at least one fatty compound containing at least one carboxyl group, with the further proviso that a fatty alcohol or ethoxylated fatty alcohol is not used on its own as the at least one fatty compound containing at least one hydroxyl group, with the further proviso that a natural fat or oil is not used on its own as the at least one fatty compound containing at least one ester group,
- with the further proviso that a sulfonate of a C₁₀₋₁₆ fatty acid alkyl ester is not used on its own as the organosulfur fatty compound and
- with the proviso that an ethylene oxide adduct of a fatty acid amide is not used as the at least one fatty compound containing at least one amide group,
as a setting retarder for a gypsum-containing composition in a quantity of 0.1 to 30% by weight, based on the dry mixture as a whole.

2. The use claimed in claim 1, **characterized in that** the gypsum-containing composition contains 0.5 to 15% by weight and, more particularly, 1 to 10% by weight, based on the dry mixture as a whole, of at least one oleochemical additive.

3. The use claimed in claim 1 or 2, **characterized in that** the fatty compound containing at least one carboxyl group also contains at least one hydroxyl group and optionally an ester or ether group.

4. The use claimed in claim 1 or 2, **characterized in that** the fatty compound containing at least one carboxyl group also contains at least one ester group and optionally at least one ether group or at least one anhydride group.

5. The use claimed in claim 1or 2, **characterized in that** the fatty compound containing at least one carboxyl group also contains an anhydride group.

6. The use claimed in claim 1 or 2, **characterized in that** the fatty compound containing at least one hydroxyl group also contains at least one ester group and, optionally, at least one other group selected from at least one amino group, at least one amide group and at least one anhydride group.

7. The use claimed in claim 1 or 2, **characterized in that** the fatty compound containing at least one hydroxyl group also contains at least one other group selected from at least one ether group and at least one amide group.

8. The use claimed in claim 1 or 2, **characterized in that** the fatty compound containing at least one ester group contains at least one other group selected from at least one amide group, at least one epoxide group or at least one anhydride group.

9. The use claimed in claim 1 or 2, **characterized in that** the fatty compound containing at least one ester group also contains at least one epoxide group and at least one ether group.

10. The use claimed in claim 1 or 2, **characterized in that** the fatty compound containing at least one amino group or at least one quaternary ammonium compound also contains at least one amide group.

11. The use claimed in claim 1 or 2, **characterized in that** the organophosphorus fatty compound contains an ester of phosphoric or phosphorous acid.

12. The use claimed in claim 1 or 2, **characterized in that** the organoboron fatty compound contains a boric acid fatty ester.

13. The use claimed in claim 1 or 2, **characterized in that** the organosulfur fatty compound contains an ester of sulfuric acid or sulfurous acid or a reaction product of fatty compounds containing activated groups with chlorosulfonic acid, sulfur trioxide or oleum.

14. The use claimed in claim 1 or 2, **characterized in that** the fatty compound containing at least one urethane group contains a reaction product of hydroxyl-containing fatty compounds with monofunctional and/or polyfunctional isocyanates.

15. The use claimed in the preceding claims, **characterized in that** the gypsum-containing composition contains drying agents in quantities of 0.01 to 1% by weight, based on the fatty compound.

16. The use claimed in the preceding claims, **characterized in that** the gypsum-containing composition contains a gypsum based on a natural gypsum, a synthetic gypsum or a gypsum from the desulfurization of waste gases.

17. The use claimed in claim 16, **characterized in that** the gypsum is present in quantities of 20 to 99.9% by weight, based on the mixture as a whole.

18. The use claimed in the preceding claims, **characterized in that** the gypsum-containing composition also contains 0 to 80% of a filler, 0 to 2% of a wetting agent, 0 to 5% of a plasticizer, 0 to 5% of an accelerator, 0 to 5% of a retarder, based on the mixture as a whole.

## Revendications

1. Utilisation d'au moins un additif de la chimie des corps gras, qui est choisi parmi
- au moins une matière grasse contenant au moins un groupe carboxyle, qui possède au moins 8 atomes de carbone avec une masse molaire de 143 à 20.000, et/ou son sel,
- au moins une matière grasse contenant un groupe hydroxyle, qui possède au moins 8 atomes de carbone, avec une masse molaire de 130 à 20.000,
- au moins une matière grasse contenant au moins un groupe ester dans lequel la partie acide et/ou la partie alcool possèdent au moins 8 atomes de carbone, avec une masse molaire de 158 à 20.000,
- au moins une matière grasse contenant au moins un groupe éther dans lequel au moins un des deux restes éther possède au moins 8 atomes de carbone avec une masse molaire de 144 à 20.000,
- au moins une matière grasse contenant au moins un groupe amino ou un sel d'ammonium quaternaire dans lequel au moins un des 3 ou 4 groupes disposés autour de l'atome de carbone, possède au moins 8 atomes de carbone, avec une masse molaire de 129 à 20.000,
- au moins une matière grasse contenant au moins un groupe amide, dans lequel le reste acide de l'amide possède au moins 8 atomes de carbone avec une masse molaire de 157 à 20.000,
- au moins une matière grasse contenant au moins un groupe époxyde, dans lequel celui-ci possède au moins 8 atomes de carbone avec une masse molaire de 128 à 20.000,
- au moins une matière grasse contenant un groupe anhydride dans lequel celui-ci possède au moins 8 atomes de carbone, avec une masse molaire de 210 à 20.000,
- au moins une matière grasse organique du phosphore, qui possède au moins 8 atomes de carbone, avec une masse molaire de 193 à 20.000,
- au moins une matière grasse organoborique qui possède au moins 8 atomes de carbone, avec une masse molaire de 174 à 20.000,
- au moins une matière grasse organo-soufrée qui possède au moins 8 atomes de carbone avec une masse molaire de 164 à 20.000,
- au moins une matière grasse possédant au moins un groupe méthane, qui possède au moins 8 atomes de carbone avec une masse molaire de 213 à 20.000,
et/ou
- au moins une matière grasse contenant au moins un groupe céto, qui possède au moins 8 atomes de carbone, avec une masse molaire de 130 à 20.000,
- avec la précision que comme matière grasse contenant au moins un groupe carboxyle on n'utilise aucun acide gras supérieur ou leurs sels tous seuls,
- avec la précision supplémentaire que comme au moins une matière grasse contenant au moins un groupe hydroxyle, on n'utilise aucun alcool gras ou alcool gras éthoxylé tout seul,
- avec la précision supplémentaire que comme au moins une matière grasse contenant au moins un groupe ester on n'utilise aucune graisse ou huile naturelle toute seule,
- avec la précision supplémentaire que comme une matière grasse organique du souffre, on n'utilise pas un sulfonate d'un ester d'allyle d'acide gras en C₁₀ à C₁₈ tout seul, ainsi qu'
- avec la précision que comme au moins contenant au moins un groupe amide on n'utilise aucun adduit d'oxyde d'éthylène d'un amide d'acide gras,
comme retardateur de prise pour une composition contenant du gypse en une quantité de 0,1 à 30 % en poids - rapporté au mélange total séché.

2. Utilisation selon la revendication 1,
**caractérisée en ce que**
la composition contenant du gypse renferme rapporté au mélange total séché, de 0,5 à 15 en particulier de 1 à 10 % en poids, d'au moins un additif de la chimie des corps gras.

3. Utilisation selon la revendication 1 ou la revendication 2,
**caractérisée en ce que**
la matière grasse contenant au moins un groupe carboxyle renferme en outre au moins un groupe hydroxyle et le cas échéant un groupe ester ou un groupe éther.

4. Utilisation selon la revendication 1 ou la revendication 2,
**caractérisée en ce que**
la matière grasse contenant au moins un groupe carboxyle contient en outre au moins un groupe ester et le cas échéant au moins un groupe éther ou au moins un groupe anhydride.

5. Utilisation selon la revendication 1 ou la revendication 2,
**caractérisée en ce que**
la matière grasse contenant au moins un groupe carboxyle renferme en outre un groupe anhydride.

6. Utilisation selon la revendication 1 ou la revendication 2,
**caractérisée en ce que**
la matière grasse contenant au moins un groupe hydroxyle renferme en outre au moins un groupe ester et le cas échéant au moins un autre groupe choisi parmi au moins un groupe amino, au moins un groupe amide, et au moins un groupe anhydride.

7. Utilisation selon la revendication 1 ou la revendication 2,
**caractérisée en ce que**
la matière grasse contenant au moins un groupe hydroxyle renferme en outre au moins un autre groupe qui est choisi parmi au moins un groupe éther et au moins un groupe amide.

8. Utilisation selon la revendication 1 ou la revendication 2,
**caractérisée en ce que**
la matière grasse contenant au moins un ester, renferme au moins un autre groupe, qui est choisi parmi au moins un groupe amide, au moins un groupe époxyde et au moins un groupe anhydride.

9. Utilisation selon la revendication 1 ou la revendication 2,
**caractérisée en ce que**
la matière grasse contenant au moins un groupe ester renferme en outre au moins un groupe époxyde et au moins un groupe éther.

10. Utilisation selon la revendication 1 ou la revendication 2,
**caractérisée en ce que**
la matière grasse contenant au moins un groupe amino ou au moins un composé d'ammonium quaternaire, renferme en outre au moins un groupe amide.

11. Utilisation selon la revendication 1 ou la revendication 2,
**caractérisée en ce que**
la matière grasse organique du phosphore renferme un ester d'acide phosphorique ou d'acide phosphoreux.

12. Utilisation selon la revendication 1 ou la revendication 2
**caractérisée en ce que**
la matière grasse organique du bore, renferme un ester gras d'acide borique.

13. Utilisation selon la revendication 1 ou la revendication 2,
**caractérisée en ce que**
la matière grasse organique du souffre renferme un ester de l'acide sulfurique ou de l'acide sulfureux ou un produit de réaction de composés solides ayant des groupes activés, avec l'acide chlorosulfonique, l'anhydride sulfurique ou l'oléum.

14. Utilisation selon la revendication 1 ou la revendication 2,
**caractérisée en ce que**
la matière grasse contenant au moins un groupe uréthane, renferme un produit de réaction de composés solides contenant des groupes hydroxyle avec des isocyanates uni- et/ou plurifonctionnels.

15. Utilisation selon des revendications précédentes,
**caractérisée en ce que**
la composition contenant du gypse renferme des substances de séchage en quantités allant de 0,01 à 1 % en poids - rapporté à la matière grasse.

16. Utilisation selon des revendications précédentes,
**caractérisée en ce que**
la composition contenant du gypse renferme un gypse à base de gypse naturel, d'un gypse chimique, ou d'un gypse provenant de la désulfuration des gaz de fumée.

17. Utilisation selon la revendication 16,
**caractérisée en ce que**
ce gypse est présent en quantités allant de 20 à 99,9 % en poids - rapporté au mélange total.

18. Utilisation selon des revendications précédentes
**caractérisée en ce que**
la composition contenant du gypse, renferme en outre de 0 à 80 % de substance de charge,
- de 0 à 2 % d'un agent d'humidification
- de 0 à 5 % d'un agent de liquéfaction
- de 0 à 5 % d'un agent d'accélération
- de 0 à 5 % d'un agent de retardement à chaque fois rapporté au mélange total.
